# EUROPEAN PATENT APPLICATION

(11) **EP 4 646 974 A1**
(43) Date of publication of application: **12.11.2025**
(21) Application number: 23914368.8
(22) Date of filing: 31.10.2023
(51) Int. Cl.: A47C 27/06

(54) **STORAGE BOX AND ELASTIC CUSHION DEVICE**

(30) Priority: 05.01.2023 CN 202310014301; 12.05.2023 CN 202310534914; 09.08.2023 CN 202310999823
(71) Applicant: New-Tec Integration (Xiamen) Co., Ltd., Xiamen, Fujian 361100 (CN)
(72) Inventor: LENG, Luhao, Xiamen, Fujian 361005 (CN)
(74) Representative: Zacco Sweden AB
(86) International application number: PCT/CN2023/128720
(87) International publication number: WO 2024/146231

(57) **Abstract**

The present disclosure relates to the technical field of storage of an elastic pad, and discloses a storage case and an elastic pad device. The storage case is used to store an elastic pad. The storage case comprises an upper case body and a lower case body that can be opened and closed by a lock structure, and the upper case body and the lower case body form a storage space configured to store elastic pad parts of the disassembled elastic pad, thereby improving the convenience in storing the elastic pad so that the elastic pad can be carried to a desired site according to the user's usage requirements, and the space occupied by the elastic pad when stored can be reduced effectively.

## Description

### FIELD

The present disclosure relates to the technical field of storage of an elastic pad, and particularly to a storage case for storing an elastic pad and an elastic pad device.

### BACKGROUND

Furniture such as beddings and sofa beds are essentials in the people's daily life. Most of the existing beddings and sofa beds are provided with elastic pads. Such elastic pads have a certain resilience and thus can provide an elastic support to a certain extent when a person is lying on the beddings or the sofa beds. As such, an elastic pad is more comfortable than a hard pad.

Existing elastic pads are usually integral, non-detachable and encapsulated pads formed by an integral bottom layer, a spring layer, a sponge overlay and enclosed side coverings and a top covering. More specifically, the spring layer is disposed on the integral bottom layer, the sponge overlay is disposed on the spring layer, and the enclosed side coverings and the top covering wrap around the sponge overlay and the bottom layer so as to form an elastic pad having an internal closed space.

However, this type of elastic pads generally exhibits a poor performance in comfort in actual use. Additionally, they are not only expensive, and also have poor stability in actual use such that comfort is deteriorated. Further, these elastic pads are inconvenient in transportation and occupy large spaces during the storage. Even more, the coverings are not easy to be cleaned. Further, such an elastic pad can only be placed at a fixed position, cannot be detached for storage, and cannot be moved to a desired position according to the user's usage requirements, for example, cannot be carried outdoors for camping.

### SUMMARY

To address at least some of the above-mentioned problems existing in the prior art, an objective of the present disclosure is to improve the convenience in storing an elastic pad, so that the elastic pad can be carried to a desired place according to the user's usage requirements, and the space occupied by the elastic pad when stored can be reduced effectively.

In order to achieve the above objective, according to a first aspect of the present disclosure, a storage case for storing an elastic pad is provided, wherein the storage case comprises an upper case body and a lower case body that can be opened and closed by a lock structure, and the upper case body and the lower case body form a storage space configured to store elastic pad parts of the disassembled elastic pad.

In the technical solution according to the present application, since the upper case body and the lower case body of the storage case can be opened and closed via the lock structure, and a storage space for storing the elastic pad parts of a disassembled elastic pad can be formed between the upper case body and the lower case body, each elastic pad part of the elastic pad may be placed in the storage space after the elastic pad is disassembled, and the storage case then may be closed via the lock structure, so that the storage case may effectively improve the convenience in storing the elastic pad. Meanwhile, by carrying the storage case, the user may carry the elastic pad to a desired site as needed, and the space occupied by the elastic pad upon storage may be reduced effectively. When the elastic pad needs to be used, the use may just open the storage case, take out the respective elastic pad parts, and then assemble the parts into the elastic pad.

In some embodiments, at least one recess recessed toward the storage space is formed on the side wall of the storage case, and each of the least one recess is provided with the lock structure.

In some embodiments, the storage case comprises a hinged side portion hingedly connecting the upper case body with the lower case body, a locking side portion arranged opposite to the hinge side portion, and locking end portions arranged opposite to each other at both sides of the hinge side portion and the locking side portion, wherein the locking side portion is provided with a plurality of the lock structures arranged at an interval in an extending direction thereof, and each of the locking end portions is provided with at least one lock structure.

In some embodiments, a side carry strap is provided on the locking side portion, wherein the side carry strap spans the at least one lock structure located in the middle in an extension direction of the locking side portion.

In some embodiments, the lock structure comprises a lock catch and a lock plate, wherein the lock catch is provided on one of the upper case body and the lower case body of the storage case, and one end of the lock plate is pivotably provided on the other one of the upper case body and the lower case body, wherein the other end of the lock plate is bent outwardly in an arc shape to form a raised portion so that the user may apply a force on the raised portion to pull the lock plate, and wherein the lock plate is formed with a lock hook capable of engaging with and disengaging from the lock catch.

In some embodiments, at least one of the locking end portions of the storage case is provided with running wheels, and the opposite other of the at least one locking end portion is provided with an end edge carry strap.

In some embodiments, at least one of the locking end portions of the storage case is provided with running wheels, and the other one of the locking end portions is provided with a telescopic pull rod.

In some embodiments, the pull rod is a U-shaped rod comprising two telescopic strut assemblies respectively provided at both lateral sides of the lower case body in a width direction thereof and extending toward the at least one locking end portion.

In some embodiments, lifting structures that can be releasably engaged with each other are provided at two opposite sides of the lower case body, wherein the two opposite sides of the storage case are provided with tying structures that can releasably engage with each other, and a tying space surrounded by the tying structures on both sides is formed to constrain a pad layer of the elastic pad which is in a wound state.

In some embodiments, the lifting structures on both sides enclose form a receiving space when they are engaged together, and the tying structures are located in the receiving space.

In some embodiments, tying structures on both sides are disposed on a corresponding lifting structure,

In some embodiments, the lifting structure on each side comprises a U-shaped lifting strap, one end of each of two connecting strap sections of the U-shaped lifting strap are disposed on a side surface of the lower case body, and the U-shaped lifting straps on both sides releasably engage with each other; the tying structures on both sides comprise tying straps disposed on two sides, ends of the tying straps on both sides far away from each other are connected to respective connecting strap sections, and ends of the tying straps on both sides facing toward each other are provided with releasable securing structures, wherein at least one tying strap among the tying straps on both sides is adjustable in length.

In some embodiments, a recess is formed on a bottom wall of the storage space, and a nested assembly formed by sequentially nesting a plurality of elastic module units after the disassembly of the elastic pad is received and retained in the recess at least via the bottom thereof.

In some embodiments, an elastic shielding portion is formed on a side wall of the storage space, and the elastic shielding portion is configured to shield an inner space of each elastic module of the lowermost elastic module unit among the sequentially-nested elastic module units of the elastic pad.

In some embodiments, the storage case comprises running wheels provided at at least one end portion and a lifting-pulling member pivotable about a pivot connection point, wherein the lifting-pulling member is configured to be pivotable to any one of a pulled position, a lifted position, and a received position.

In some embodiments, the lifting-pulling member is configured to be parallel to a top surface of the storage case when in the pulled position.

In some embodiments, when the lifting-pulling member is in its lifted position, a gripping bar of the lifting-pulling member is positioned above a middle portion of the storage case.

In some embodiments, when the lifting-pulling member is in its received position, the gripping bar of the lifting-pulling member contacts the top surface of the storage case.

In some embodiments, the storage case further comprises a first releasable stop structure configured to retain the lifting-pulling member in the pulled position.

In some embodiments, the first releasable stop structure comprises a fixed base, a first puller, a first stop bar, and a first hook, wherein the fixed base is disposed to separate from the first hook, the first stop bar is pivotally connected to the first puller which is pivotally disposed on the fixed base, and the first puller, upon pivoting, can move the first stop bar, wherein when the first puller is in a released position, the first stop bar can be allowed to be hung on the first hook; when the first puller is pivoted to a locking position, the first stop bar and the first hook are locked, and the lifting-pulling member can be held in the pulled position by the first stop bar; and wherein when the first puller is pivoted to the released position, the first stop bar and the first hook are unlocked so that the first stop bar can disengage from the first hook, thereby allowing the lifting-pulling member to disengage from the first stop bar.

In some embodiments, the storage case further comprises a second releasable stop structure which is configured to allow the lifting-pulling member to pivot between the lifted position and received position when cooperating with the lifting-pulling member.

In some embodiments, the second releasable stop structure is configured to allow the lifting-pulling member to pivot from the lifted position to the received position under the action of its own gravity and to pivot from the received position to the lifted position under the action of a lifting force applied by the user.

In some embodiments, the second releasable stop structure comprises a fixed plate, a second puller, a second stop bar and a second hook, wherein the second puller is pivotably disposed at one end of the fixed plate, the second hook is disposed at the other end of the fixed plate, the second stop bar is pivotally connected to the second puller which is configured to move the second stop bar upon pivoting, wherein when the second puller is in a released position, the second stop bar is allowed to be hung on the second hook, and when the second puller is pivoted to a locking position, the second stop bar and the second hook are locked, so that a holding space is formed between the second stop bar and the fixed plate, and the lifting-pulling member can pass through the holding space to pivot between the lifted position and the received position; and wherein, when the second puller is pivoted to the released position, the second stop bar and the second hook are unlocked such that the second stop bar disengages from the second hook, thereby enabling the lifting-pulling member to disengage from the holding space.

In some embodiments, the lifting-pulling member is configured to be adjustable in length.

In some embodiments, opposite end portions of the storage case are provided with the running wheels, respectively, and the storage case comprises two opposite and spaced-apart lifting-pulling members.

In some embodiments, the lifting-pulling member further comprises side rods, and one end of the side rods is disposed at a side portion of the storage case via a pivot structure, so that the lifting-pulling member can be pivoted, wherein the storage case further comprises a first releasable stop structure and a second releasable stop structure which are disposed at its side portion, the first releasable stop structure is configured to maintain the lifting-pulling member in the pulled position, and the second releasable stop structure is configured to allow the lifting-pulling member to pivot between the lifted position and the received position when the second releasable stop structure engages with the lifting-pulling member.

In some embodiments, the second releasable stop structure is disposed in an upward sloping manner such that a lifting stop point of the second releasable stop structure is higher than a receiving stop point, and the lifting stop point is located between the receiving stop point and the pivot connection point.

In some embodiments, the lifting-pulling member is a U-shaped member, two side bars of the U-shaped member are provided at its one end on the opposite side portions of the storage case by means of their respective pivot structures, and the other end of the two side bars of the U-shaped member connected by a gripping bar, and every side portion is provided with a first releasable stop structure and a second releasable stop structure.

In some embodiments, an edge of an access opening of one of the upper case body and lower cases body is formed with a pre-positioning groove extending circumferentially, an edge of an access opening of the other of the upper case body and lower case body is formed with a pre-positioning flange extending circumferentially, and the pre-positioning flange is configured to match with the pre-positioning groove.

In a second aspect, the present disclosure provides an elastic pad device, comprising an elastic pad and the storage case according to any solutions described in the above first aspect, wherein the elastic pad is configured to be detachably assembled; wherein the elastic pad is configured such that the elastic pad parts of the disassembled elastic pad can be stored in the storage space and the storage case can be closed, and can be taken out of the storage space and assembled into the elastic pad after the storage case is opened.

Accordingly, after the elastic pad is disassembled, all the elastic pad parts of the elastic pad may be placed in the storage space, and then the storage case may be closed by the lock structure. Consequently, the storage case may effectively improve the convenience in storing the elastic pad. Meanwhile, by carrying the storage case, the user may carry the elastic pad to a desired site according to the user's usage requirements, and the space occupied when the elastic pad is stored may be effectively reduced. When the elastic pad needs to be used, the user may open the storage case, take out the respective elastic pad parts and assemble the parts into the elastic pad.

In some embodiments, the elastic pad comprises a pad layer and a plurality of elastic module units, wherein each elastic module unit comprises a fixed bottom plate formed with a plurality of openings and a plurality of elastic modules that are disposed on the plurality of openings of the fixed bottom plate, each elastic module is formed with an inner space, wherein the plurality of elastic modules of one elastic module unit can be respectively embedded into an inner space of the plurality of elastic modules of another elastic module unit through corresponding openings on the fixed bottom plate of the another elastic module unit, so that the plurality of elastic module units can be sequentially nested together to form a nested assembly, wherein the inner space of each elastic module of the lowermost elastic module unit serves as an article-placing space for receiving additional articles; the pad layer is configured to be folded from an unfolded state into a folded block; wherein the nested assembly and the folded block can be placed in the storage space.

In some embodiments, the folded block is a U-shaped block that wraps an elastic module portion of the nested assembly.

In some embodiments, the nested assembly is received and retained in a recess formed on a bottom wall of the storage space at least via the bottom thereof.

In some embodiments, the fixed bottom plate comprises splicing sides arranged opposite to each other and end sides arranged opposite to each other, each of the end side includes a plurality of connectors, the plurality of connectors include at least one of a rotary detent member and an engagement member, the rotary detent member is configured to swing to and fro about a pivot axis so that it releasably engages an engagement member of an adjacent elastic module unit; and the engagement member is configured to releasably engage with a rotary detent member of an adjacent elastic module unit, wherein the plurality of fixed bottom plates are spliced together by the engagement of the adjacent rotary detent members and engagement members, so that the plurality of elastic module units are assembled into an elastic support layer.

In some embodiments, corners of each of the end sides are respectively provided with the connectors.

In some embodiments, each of the end sides is provided with the rotatory detent member and the engagement member.

In some embodiments, the rotary detent members disposed at the two end sides arranged opposite to each other are located on one of diagonals of the elastic module unit, the engagement members are located on the other of the diagonals of the elastic module unit, and the rotation direction of the rotary detent members are identical.

In some embodiments, the engagement member comprises a snap-in post.

In some embodiments, a receiving groove for receiving connectors is formed on a peripheral side surface of each corner of the fixed bottom plate.

In some embodiments, an operating opening is formed on an upper side wall of the receiving groove so that a user can apply a force to rotate the rotary detent member.

In some embodiments, the rotary detent member comprises a detent hook and a peg, the detent hook is configured to be releasably snapped to an engagement member of an adjacent elastic module unit, wherein, the rotary detent member has a storage position where the peg is located within the receiving groove and a part of the detent hook extends laterally out from the receiving groove, and an engagement position where the detent hook is located within the receiving groove of the adjacent elastic module unit and a part of the peg extends laterally out from the receiving groove of the adjacent elastic module unit.

In some embodiments, the rotary detent member is configured to releasably hook a corresponding connection rope on a cover of the elastic pad.

In some embodiments, a pre-positioning structure is formed on each of the splicing sides, and is configured to engage a pre-positioning structure on a splicing side of a fixed bottom plate of an adjacent elastic module unit.

In some embodiments, the pre-positioning structure comprises a first pre-positioning structure and a second pre-positioning structure that are spaced apart in an extending direction of the splicing side, the second pre-positioning structure is different from the first pre-positioning structure; wherein, the first pre-positioning structure is configured to engage with a second pre-positioning structure of an adjacent elastic module unit, and the second pre-positioning structure is configured to engage with a first pre-positioning structure of an adjacent elastic module unit.

In some embodiments, the first pre-positioning structure located at one side of the elastic module unit and the second pre-positioning structure located at the other side are aligned with each other in a transverse direction of the elastic module unit, and the second pre-positioning structure located at one side of the elastic module unit and the first pre-positioning structure located at the other side are aligned with each other in the transverse direction of the elastic module unit.

In some embodiments, the first pre-positioning structure is a pre-positioning bump, and the second pre-positioning structure is a pre-positioning groove.

In some embodiments, the fixed bottom plate comprises a first plate portion and a second plate portion arranged in a lengthwise direction thereof, a plurality of elastic modules being provided on the first plate portion and the second plate portion, respectively, wherein an end of the first plate portion and the second plate portion, facing toward each other, are connected together by a hinge structure at its one side, and the other side of the end of the first plate portion and the second plate portion, facing toward each other is disposed with a releasable connecting structure, wherein in a first position, wide sides of the first plate portion and the second plate portion are spliced together; when the connecting structure is released, the first plate portion and the second plate portion can be pivoted from the first position to a second position; in the second position, long sides of the first plate portion and the second plate portion are spliced together.

In some embodiments, the nested assembly, when placed in the storage space, forms a storage gaps with side walls of the storage space, wherein the folded block can be inserted into the storage gaps.

In some embodiments, the elastic pad further comprises a cover, wherein the cover is configured to be folded from an unfolded state to a folded state and be received in the folded block.

In some embodiments, the elastic pad further comprises a cover comprising at least one inner core layer containing an elastic core layer; an outer wrapping sleeve releasably wrapping the at least one inner core layer; a stop fold folded downward from a peripheral edge of the cover in a thickness direction of the elastic pad and extending a predetermined distance to form an inner space capable of receiving and shielding the pad layer of the elastic pad; wherein the cover is laid on the pad layer of the elastic pad, and the pad layer is received and limited in the inner space; and wherein the cover can be received in the storage space after being folded

In some embodiments, the stop fold is formed in such a way that a portion of the outer wrapping sleeve is folded downward from the peripheral edge of the cover and extends a predetermined distance.

In some embodiments, the at least one inner core layer is folded down from the peripheral edge of the cover and extends a predetermined distance so as to form a folded layer, and the outer wrapping sleeve is folded down from the peripheral edge of the cover and extends a predetermined distance so as to form a folded sleeve, wherein the folded sleeve wraps the folded layer to form the stop fold.

In some embodiments, the cover further comprises an edge connection structure configured to connect with a bottom layer of the elastic pad; the stop fold and the edge connection structure jointly form the elastic pad without a sealed sidewall.

In some embodiments, the edge connection structure comprises a plurality of connection ropes arranged spaced-apart in the peripheral direction of the elastic pad.

In some embodiments, at least two opposing stop folds of the stop folds are connected to the bottom layer of the elastic pad by the edge connection structure.

In some embodiments, the stop folds extend close to the bottom layer of the elastic pad and are spaced apart a predetermined distance from the bottom layer of the elastic pad, and the length of the stop fold is set so as to shield at least a part or all of the height of the elastic module of the elastic pad.

In some embodiments, the elastic pad device further comprises a support frame configured to have a flat state where the elastic pad can be laid on the support frame and a storage state where the support frame can be received in the storage space and the storage case can be closed.

In some embodiments, the plurality of elastic module units of the elastic pad can be sequentially nested together to form a nested assembly that can be placed in the storage space in a manner of its horizontally-spaced plurality of elastic modules being oriented upward; the support frame in the storage state has a plurality of through-spaces that are horizontally spaced from each other and can be placed on the nested assembly such that the elastic modules are received in the corresponding through-spaces.

In some embodiments, the support frame comprises a plurality of longitudinal support members and a plurality of transverse support members detachably assembled together, wherein each of the longitudinal support members comprises a plurality of first through-spaces that are spaced apart from each other, each of the first through-spaces is configured to receive at least one elastic module; each of the transverse support members comprises a plurality of second through-spaces spaced apart from each other and configured to receive at least two elastic modules.

In some embodiments, each of the longitudinal support members comprises a plurality of longitudinal support sections connected sequentially together in a longitudinal direction, and the plurality of longitudinal support sections can be stacked together such that the first through-spaces of the plurality of longitudinal support sections overlap; and/or, each of the transverse support members comprises a plurality of transverse support sections sequentially connected together in the transverse direction, and the plurality of transverse support sections can be stacked together such that the second through-spaces of the plurality of transverse support sections overlap.

In some embodiments, the plurality of longitudinal support sections are rotatably coupled together sequentially in the longitudinal direction; and/or, the plurality of transverse support sections are rotatably connected together sequentially in a transverse direction.

In some embodiments, the elastic pad serves as an elastic mattress.

It is evident that elements or features described in a single embodiment above may be used alone or in combination in other embodiments.

### BRIEF DESCRIPTION OF THE DRAWINGS

In the figures, sizes and proportions do not represent sizes and proportions of actual products. The figures are merely illustrative, and certain unnecessary elements or features have been omitted for the sake of clarity.
FIG. 1 is a perspective view exemplarily illustrating a first type of elastic module unit of an elastic pad according to the present disclosure, wherein a rotary detent member is in a received position.
FIG. 2 is a partial structural view of the elastic module unit of FIG. 1.
FIG. 3 is a perspective view of the rotary detent member of the elastic module unit of FIG. 1 at an engaged position.
FIG. 4 is a partial structural view of the elastic module unit of FIG. 3.
FIG. 5 is a schematic plan view of the elastic module unit of FIG. 3.
FIG. 6 is a schematic view showing that two second-type elastic module units of the elastic pad according to the present disclosure are spliced.
FIG. 7 is a schematic view in which the two elastic module units of FIG. 6 are at an engaged position, wherein two rotary detent members shown in dotted line represent positions where the rotary detent members swing.
FIG. 8 is a schematic view showing an elastic support layer of an elastic pad formed by splicing a plurality of elastic module units in the splicing manner shown in FIG. 7.
FIG. 9 is an exploded view exemplarily showing a first type of elastic pad according to the present disclosure, showing the elastic support layer shown in FIG. 8 and a first type of a covering provided by the present disclosure.
FIG. 10 is a perspective view of the elastic pad of FIG. 9 in an assembled state.
FIG. 11 is an enlarged view of a circled portion of FIG. 10.
FIG. 12 is an exploded view exemplarily showing a second type of elastic pad according to the present disclosure, showing the elastic support layer shown in FIG. 8 and a second type of the covering provided by the present disclosure.
FIG. 13 is a perspective view showing the elastic pad of FIG. 12 in an assembled state.
FIG. 14 is an enlarged view of a circled portion in FIG. 13.
FIG. 15 is a partial structural view of the elastic pad of FIG. 13.
FIG. 16 is a partial cross-sectional view of a type of covering according to the present disclosure.
FIG. 17 is a partial cross-sectional view of another type of covering according to the present disclosure.
FIG. 18 is a partial cross-sectional view of a pad layer provided by the present disclosure.
FIG. 19 is a perspective view exemplarily showing a first type of storage case according to the present disclosure as viewed from a view angle.
FIG. 20 is a perspective view of the storage case of FIG. 19 as viewed from another view angle.
FIG. 21 is a schematic perspective view of the storage case of FIG. 19 as viewed from other view angles.
FIG. 22 is a schematic view showing that the storage case of FIG. 19 is moved.
FIG. 23 is a schematic view showing that an elastic pad is stored in the storage case after being disassembled.
FIG. 24 is another schematic view showing that an elastic pad is stored in the storage case after being disassembled.
FIG. 25 is a schematic view of a nested assembly formed by nestling a plurality of elastic module units of the elastic pad of the present disclosure sequentially.
FIG. 26 is a bottom view of a type of elastic module unit of the elastic pad of the present disclosure.
FIG. 27 is an exploded view showing the elastic pad according to the present disclosure is stored in the storage case in a manner after being disassembled.
FIG. 28 is an exploded view showing the elastic pad according to the present disclosure is stored in the storage case in another manner after being disassembled.
FIG. 29 is a perspective view a second type of elastic module unit of the elastic pad according to the present disclosure, wherein the elastic module unit is at a first position.
FIG. 30 is a schematic view of an intermediate process of the transition of the elastic module unit of FIG. 29 from a first position to a second position.
FIG. 31 is a schematic view of the elastic module unit of FIG. 30 at a second position.
FIG. 32 is a schematic view of a process in which a plurality of the elastic module units of FIG. 31 are being sequentially nested together to form a nested assembly.
FIG. 33 is a schematic view of a nestled assembly formed by nestling a plurality of elastic module units of FIG. 31 sequentially together.
FIG. 34 is a schematic view in which the nested assembly of FIG. 33 is positioned in a second type of storage case according to the present disclosure.
FIG. 35 is a schematic view in which a plurality of elastic module units of FIG. 31 are nested sequentially and placed in the second type of storage case according to the present disclosure.
FIG. 36 is a schematic view of a process of closing the second type of storage case according to the present disclosure.
FIG. 37 is a schematic view showing the second type of storage case according to the present disclosure in a closed state.
FIG. 38 is a schematic view showing the second type of storage case travels via a pull rod according to the present disclosure.
FIG. 39 is a schematic view showing that a third type of storage case is in an open state according to the present disclosure.
FIG. 40 is a schematic view showing that a nested assembly is placed in the storage case of FIG. 39 to leave a storage space according to the present disclosure.
FIG. 41 is a schematic view showing that folded blocks are inserted in the storage space of FIG. 40 according to the present disclosure.
FIG. 42 is a schematic view showing that the storage case of FIG. 41 is in a closed state and placed horizontally with a lifting-pulling member is in a pulled position.
FIG. 43 is a schematic view in which the storage case of FIG. 42 is placed vertically.
FIG. 44 is a partially enlarged schematic view of FIG. 43.
FIG. 45 is a schematic view showing that the storage case of FIG. 42 is placed horizontally with the lifting-pulling member being in a lifted position.
FIG. 46 is a partially enlarged schematic view of FIG. 45.
FIG. 47 is a schematic view showing that the storage case of FIG. 42 is placed horizontally with the lifting-pulling member being in a received position.
FIG. 48 is a partially enlarged schematic view of FIG. 47.
FIG. 49 is an exemplary perspective view of a support frame of an elastic pad device according to the present disclosure.
FIG. 50 is a perspective view showing a plurality of elastic module units of the elastic pad of the present disclosure are assembled together and placed on the support frame of FIG. 49.
FIG. 51a-FIG. 51d are schematic views in which transverse support members of FIG. 49 are folded together.
FIG. 52a-FIG.52e are schematic views in which longitudinal support members of FIG. 49 are folded together.
FIG. 53 is a schematic view in which some longitudinal support members folded together in FIG. 52e are placed on the nested assembly.
FIG. 54 is a schematic view in which some other longitudinal support members folded together in FIG. 52e are placed on the nested assembly.
FIG. 55 is a schematic view in which transverse support members folded together are placed on the nested assembly.
FIG. 56 is a schematic view in which all longitudinal support members and transverse support members are placed on the nested assembly.

### Description of Reference Numerals

1-elastic module unit, 2-elastic pad, 3-fixed bottom plate, 4-elastic module, 5-splicing side, 6-end side, 7-rotary detent member, 8-engagement member, 9-snap-in post, 10-receiving groove, 11-upper side wall, 12- operating opening, 13-detent hook, 14-peg, 15-pad layer, 16-connecting rope, 17- first pre-positioning structure, 18- second pre-positioning structure, 19-pre-positioning bump, 20-pre-positioning groove, 21- elastic support layer, 22-cover, 23-stop fold, 24-storage case, 25-lock structure, 26-recess, 27-hinged side portion, 28-locking side portion, 29-locking end portion, 30-side carry strap, 31-lock catch, 32-lock plate, 33-upper case body, 34-lower case body, 35-raised portion, 36-lock hook, 37-running wheel, 38-end edge carry strap, 39-nested assembly, 40-article placing space, 41-folded block, 42-U-shaped block, 43-elastic module portion, 44-pre-positioning groove, 45-pre-positioning flange, 46-pull rod, 47-U-shaped rod, 48-strut assembly, 49-lifting structure, 50-tying structure, 51-tying space, 52-receiving space, 53- U-shaped lifting strap, 54-connecting strap section, 55-tying strap, 56- pivot connection point, 57-lifting-pulling member, 58-pivot structure, 59-storage gaps, 60-first releasable stop structure, 61-second releasable stop structure, 70-support frame, 71-through-space, 72-longitudinal support member, 73- transverse support member, 151-outer sleeve, 152-inner elastic layer, 153- inner flexible layer, 221-inner core layer, 222-outer wrapping layer, 231-inner space, 2211-foleded layer, 2221-folded sleeve, 240-top surface, 311-first plate portion, 312-second plate portion, 313-hinge structure, 314-connecting structure, 570-gripping bar, 571-side bar, 601-fixed seat, 602-first puller, 603-first stop bar, 604-first hook, 610-fixed plate, 611-second puller, 612-second stop bar, 613-second hook, 614-holding space, 615-lift stop point, 616-retracting stop point, 721-first through-space, 722-longitudinal support section, 731-second through-space, 732-transverse support section.

### DETAILED DESCRIPTION OF EMBODIMENTS

Hereunder, a storage case and an elastic pad device of the present disclosure will be described in detail with reference to the accompanying drawings. What have been described herein are merely preferred embodiments according to the present disclosure. Those skilled in the art can conceive of other ways of implementing the present disclosure on the basis of the preferred embodiments, and said other ways also fall within the scope of the present disclosure.

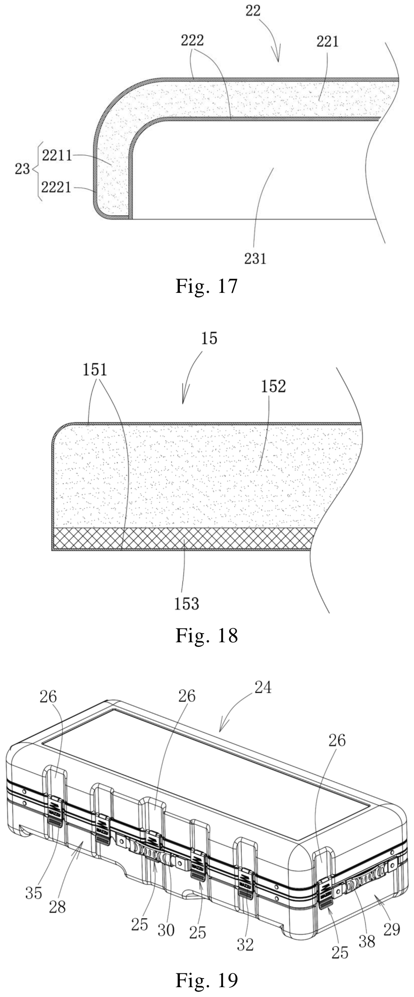

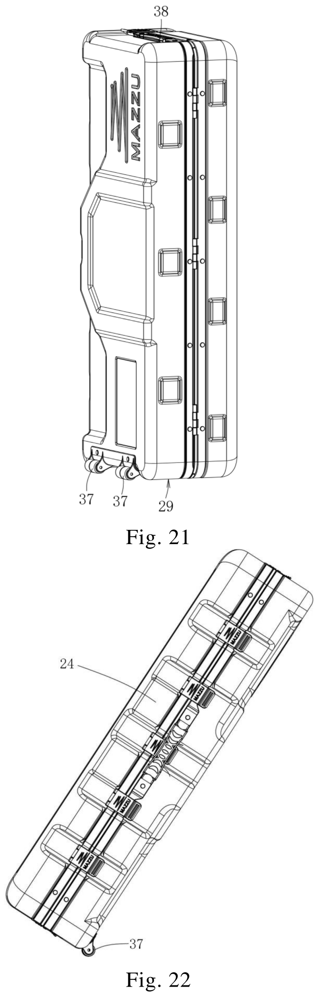

In a first aspect, referring to FIG. 19 through FIG. 28, the present disclosure provides a storage case 24 for storing an elastic pad. The storage case 24 comprises an upper case body 33 and a lower case body 34 that can be opened and closed by a lock structure 25, the upper case body 33 and the lower case body 34 form a storage space, i.e. the storage space is formed between the upper case body 33 and the lower case body 34, and the storage space is configured to store elastic pad parts of the disassembled elastic pad 2.

In the storage case 24, since the upper case body 33 and the lower case body 34 of the storage case 24 can be opened and closed via the lock structure 25, and a storage space for storing the elastic pad parts of a disassembled elastic pad can be formed between the upper case body 33 and the lower case body 34, each elastic pad part of the elastic pad may be placed in the storage space after the elastic pad is disassembled, and the storage case 24 then may be closed via the lock structure 25, so that the storage case 24 may effectively improve the convenience in storing the elastic pad 2. Meanwhile, by carrying the storage case 24, the user may carry the elastic pad 2 to a desired site as needed, and the space occupied by the elastic pad 2 upon storage may be reduced effectively. When the elastic pad 2 needs to be used, the use may just open the storage case, take out the respective elastic pad parts, and then assemble the parts into the elastic pad.

In addition, in some embodiments, side walls of the storage case 24 may be straightly-extending side walls such that the lock structure 25 is disposed on and protrudes from the straight side walls. In addition, in other embodiments, referring to FIG. 19, at least one recess 26 recessed toward the storage space is formed on the side wall of the storage case 24, and the lock structure 25 is provided in each recess 26, that is, the lock structure 25 is positioned in the recess 26. In this way, most or all of the lock structures 25 may be positioned in the recesses 26. Due to the protection provided by the recesses 26, the lock structures 25 may be further prevented from being scratched or collided, so that the durability of the storage case 24 is improved.

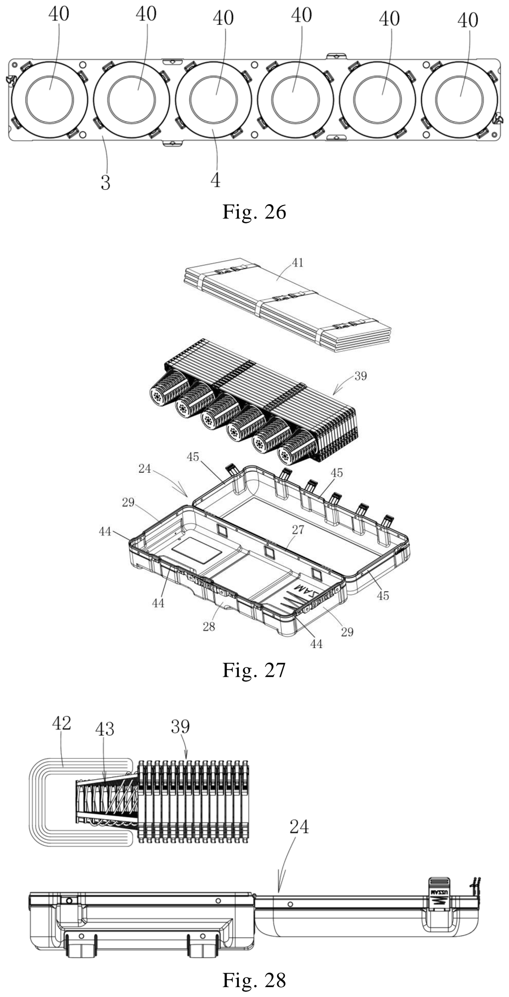

Furthermore, in the storage case 24, the lock structure 25 may be provided at any desired position of the storage case 24 as long as opening and closing of the upper case body 33 and the lower case body 34 can be achieved. For example, in some embodiments, referring to FIG. 19 and FIG. 27, the storage case 24 comprises a hinged side portion 27 hingedly connecting the upper case body 33 with the lower case body 34, a locking side portion 28 arranged opposite to the hinged side portion 27, and locking end portions 29 arranged opposite to each other at both sides of the hinged side portion 27 and the locking side portion 28, wherein the hinged side portion 27 is provided with a plurality of hinge structures hingedly connecting the upper case body 33 with the lower case body 34, the locking side portion 28 is provided with a plurality of lock structures 25 arranged at an interval in an extending direction thereof, and each locking end portion 29 is provided with at least one lock structure 25. Thus, the upper case body 33 and the lower case body 34 may be stably and reliably locked together by the plurality of lock structures 25 on the locking side portion 28 and at least one lock structure 25 on each of the locking end portions 29.

In addition, in some embodiments, in order to facilitate carrying of the storage case 24, with reference to FIG. 19, FIG. 20, and FIG. 27, a side carry strap 30 is provided on the locking side portion 28, wherein the side carry strap 30 spans the at least one lock structure 25 located in the middle in an extension direction of the locking side portion 28. In this manner, the side carry strap 30 may provide protection to the at least one middle lock structure 25 while helping the user to lift the storage case.

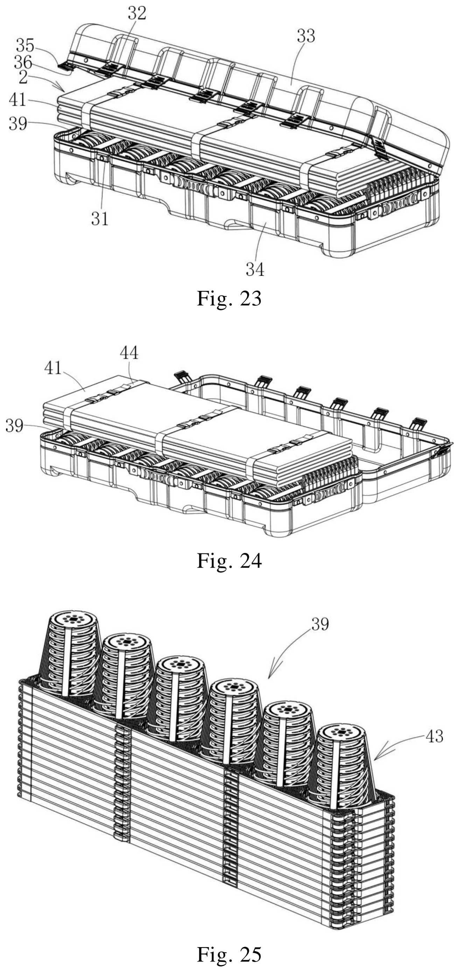

In addition, in the storage case 24, the lock structure 25 may have various types as long as the upper case body 33 and the lower case body 34 can be opened and closed regardless of the type of the lock structure 25. For example, in one type of the lock structure 25, referring to FIG. 23, the lock structure 25 comprises a lock catch 31 and a lock plate 32, wherein the lock catch 31 is provided on one of the upper case body 33 and the lower case body 34 of the storage case 24, and one end of the lock plate 32 is pivotably provided on the other of the upper case body 33 and the lower case body 34. For example, in FIG. 23, the lock catch 31 is provided on the lower case body 34, and one end of the lock plate 32 is pivotably provided on the upper case body 33, wherein the other end of the lock plate 32 is bent outwardly in an arc shape to form a raised portion 35 so that the user may apply a force on the raised portion to pull the lock plate, and the lock plate 32 is formed with a lock hook 36 capable of engaging with and disengaging from the lock catch 31. Thus, the user may lock and unlock the latch hook 36 and the lock catch 31 by applying a pressing force or a releasing force to the raised portion 35.

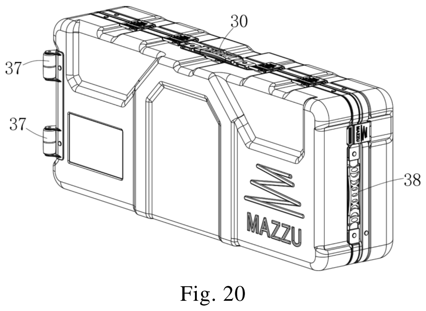

In addition, the storage case 24 according to the present disclosure may have various structures. For example, in some embodiments of a first type of storage case 24, referring to FIG. 20, FIG. 21 and FIG. 22, at least one of the locking end portions 29 of the storage case 24 is provided with running wheels 37, and the opposite other of the at least one locking end portion 29 is provided with an end edge carry strap 38. In this way, the user may conveniently grasp the end edge carry strap 38 to pull the storage case 24 to walk to carry the elastic pad to any desired location. For example, in some embodiments, one locking end portion 29 of the storage case 24 is provided with running wheels 37, and the opposite other locking end portion 29 is provided with the end edge carry strap 38. For another example, in some embodiments, one locking end portion 29 of the storage case 24 is provided with running wheels 37 and the end edge carry strap 38, and the opposite other locking end portion 29 is provided with running wheels 37 and the end edge carry strap 38. Thus, the storage case 24 may be pulled by any one of the end edge carry straps 38. In addition, when all of the running wheels 37 land on the ground, the storage case 24 may be pushed. In addition, two persons may also lift the storage case 24 by holding the two end edge carry straps 38 at the two locking end portions 29.

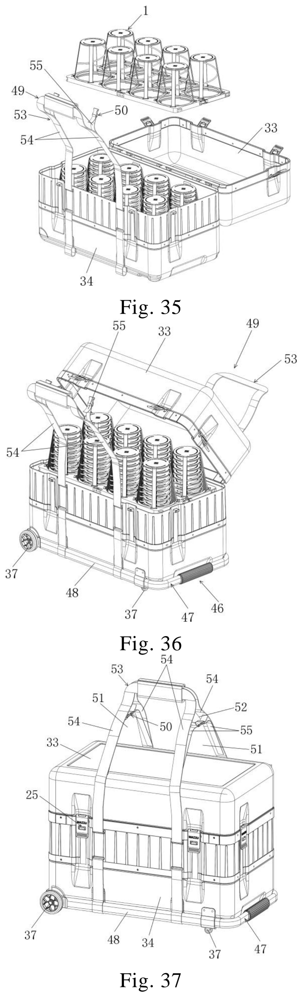

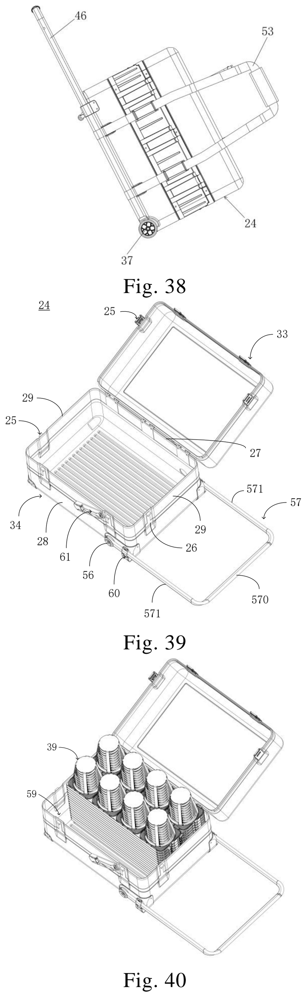

In addition, in some embodiments of a second type of storage case 24, referring to FIG. 37 and FIG. 38, at least one locking end portions 29 of the storage case 24 is provided with running wheels 37, for example, two running wheels 37, and the other locking end portion 29 is provided with a telescopic pull rod 46. In this way, the user may pull the storage case 24 to walk by pulling the pull rod 46 after pulling the pull rod 46 to a desired length according to his/her own needs. For example, in some embodiments, one locking end portion 29 of the storage case 24 is provided with running wheels 37, and the other opposite locking end portion 29 is provided with the telescopic pull rod 46. In other embodiments, the two opposite locking end portions 29 of the storage case 24 are provided with running wheels 37, whereupon the running wheels 37 at the two locking end portions 29 may be the same or different, and any one of the locking end portions 29 is provided with the telescopic pull rod 46, so that the storage case 24 may be pushed when the running wheels 37 at the two locking end portions 29 all land.

In addition, in the storage case of the present disclosure, the pull rod 46 may have various structural types. For example, in one structural type of the pull rod 46, the pull rod 46 may be a T-shaped rod. A longitudinal rod section of the T-shaped rod may be a telescopic rod section. The telescopic rod section may be fixed at the bottom of the lower case body of the storage case 24. A transverse rod section of the T-shaped rod may serve as a gripping rod section for the user to grip. As another example, in another structural type of the pull rod 46, referring to FIGS. 37 and 38, the pull rod 46 is a U-shaped rod 47. Two telescopic strut assemblies 48 of the U-shaped rod 47 are respectively provided at both lateral sides of the lower case body 34 in a width direction thereof and extend toward the at least one locking end portion 29. A transverse rod section of the U-shaped rod 47 may serve as a gripping rod section for gripping by the user. In this way, the two strut assemblies 48 may significantly enhance the support strength of the bottom of the lower case body 34, so that the storage case 24 may have a higher predetermined height to form a larger storage space inside. Furthermore, when such a storage case 24 having a higher predetermined height is laid flat, the storage case 24 may also serve as a support table, and the user may place desired articles on a top surface of the upper case body 33.

In addition, in some embodiments, to facilitate carrying the storage case, referring to FIG. 35, FIG. 36, and FIG. 37, lifting structures 49 that can be releasably engaged each other are provided at two opposite sides of the lower case body 34 so that the user may lift the storage case through the lifting structures 49 to facilitate carrying. In addition, the two opposite sides of the storage case 24 are provided with tying structures 50 that can releasably engage with each other, and a tying space 51 surrounded by the tying structures 50 on both sides is formed to constrain the pad layer 15 of the elastic pad which is in a wound state. Thus, the pad layer 15 of the elastic pad may be wound into a cylinder and then placed in the tying space 51 and fixed by the tying structures 50, so that the pad layer 15 may be efficiently stored for ease of carrying.

Additionally, in some embodiments, the lifting structures 49 and the tying structures 50 may be located at different locations of different storage cases. In some embodiments, referring to FIG. 37, the lifting structures 49 on both sides form a receiving space 52 above the upper case body 33 when they are engaged together, and the tying structures 50 are located in the receiving space 42. In this way, the receiving space 52 may be efficiently used to arrange the tying structures 50. In addition, the tying space 51 formed by the tying structures 50 may be located in the receiving space 52 or may be located outside the receiving space 52.

In addition, in some embodiments, the tying structures 50 on both sides may be disposed on the storage case 24, for example on the upper case body 33, or the lower case body 34. In some embodiments, referring to FIG. 37, tying structures 50 on both sides are disposed on a corresponding lifting structures 49. In this way, the tying structures may be effectively provided by the lifting structures 49. In addition, connection portions of the tying structures and the lifting structures 49 may also increase the strength of the lifting structures. In addition, when the tying structures on both sides engage with each other, the lifting structures 49 may be restrained. Even if the lifting structures 49 on both sides do not engage each other, the unengaged lifting structures 49 may be prevented from moving away from each other by the restraint on the lifting structures 49, thereby facilitating the user to grasp the lifting structures on both sides together.

In addition, in the storage case of the present disclosure, the lifting structures 49 and the tying structures 50 may have various structures, but any structure may be used as long as the above depictions are satisfied. For example, in some embodiments, referring to FIG. 37, the lifting structure 49 on each side comprises a U-shaped lifting strap 53, one end of each of two connecting strap sections 54 of the U-shaped lifting strap 53 are disposed on a side surface of the lower case body 34, and the U-shaped lifting straps 53 on both sides releasably engage with each other. The tying structures 50 on both sides each comprise tying straps 55 disposed on two sides, ends of the tying straps 55 on both sides far away from each other are connected to respective connecting strap sections 54, and ends of the tying straps 55 on both sides facing toward each other are provided with releasable securing structures, wherein at least one tying strap 55 among the tying straps 55 on both sides is adjustable in length so that the length of the tying strap may be adjusted according to needs. As such, the user may conveniently lift the storage case through the U-shaped lifting straps 53 on both sides. Meanwhile, if necessary, the tying straps 55 on both sides may conveniently tie the pad layer of the elastic pad. The releasable securing structures may comprise a lace, a hook-and-loop or a snap-fitting plug and receptacle, or any other securing structure.

Furthermore, in some embodiments, in order to improve the stability in storing the elastic pad 2, a recess (not shown) is formed on a bottom wall of the storage space, and the nested assembly 39 formed by sequentially nesting a plurality of elastic module units 1 after the disassembly of the elastic pad 2 is received and retained in the recess at least via the bottom thereof, so that the stability in receiving the elastic pad 2 may be further improved by the retention of at least the bottom of the nested assembly 39 by the recess.

In addition, in some embodiments, an elastic shielding portion is formed on a side wall of the storage space. The elastic shielding portion may be an elastic block (e.g., a rubber block or a spring), or a spring and a shielding plate (not shown). The shielding plate may be connected to the side wall of the storage space by a spring. The elastic shielding portion is configured to shield an inner space of each elastic module 4 of the lowermost elastic module unit 1 among the sequentially-nested elastic module units of the elastic pad. As such, referring to FIG. 25 and FIG. 26, the inner space of each elastic module 4 may be used as an article placing space 40 for placing additional articles. In this way, when the elastic pad is stored, additional articles such as water bottles, lamps, fuel bottles, pots, air pumps, and/or stove stands, etc. are placed in the respective article receiving spaces 40, thereby increasing the number of articles to be carried and improving the space utilization of the elastic pad in the storage space.

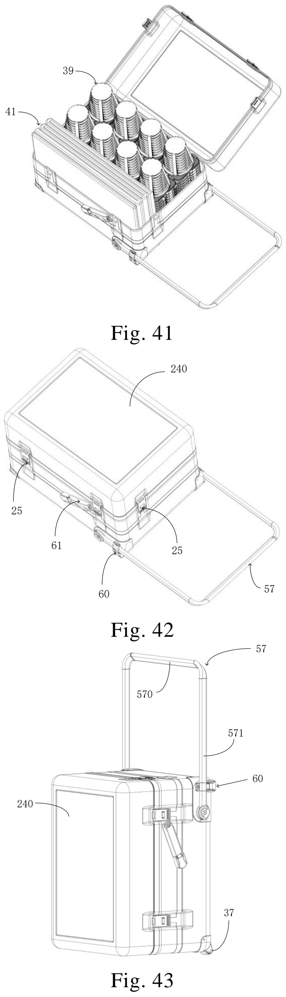

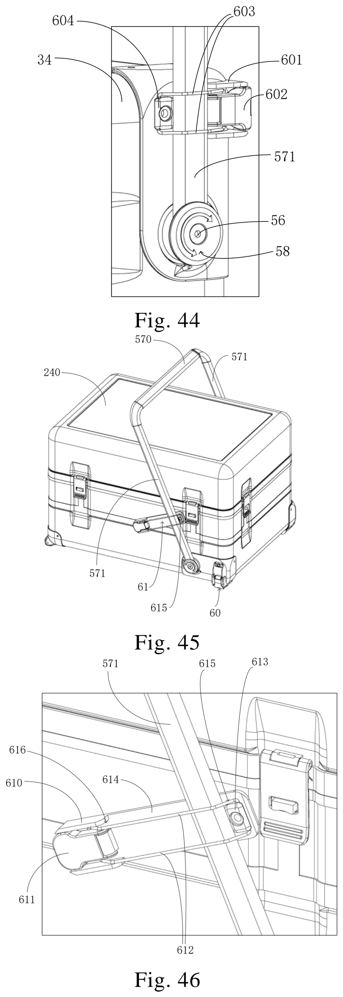

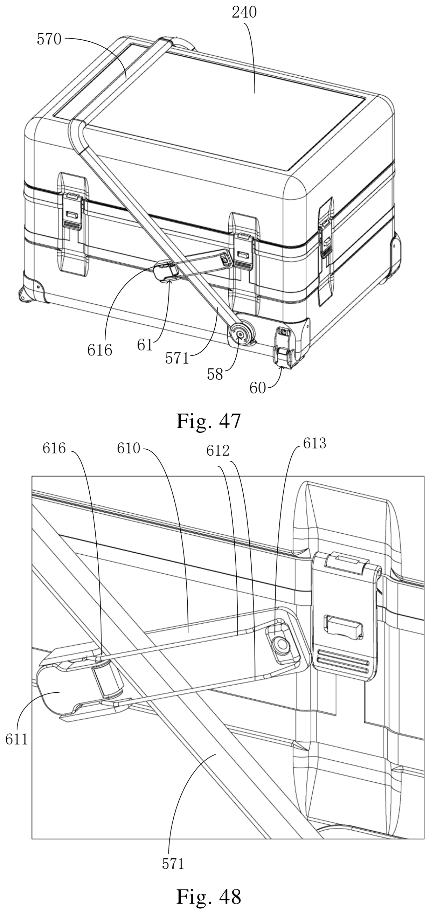

In addition, in some embodiments of a third type of storage case 24 according to the present disclosure, referring to FIG. 39 to FIG. 48, the storage case 24 comprises running wheels 37 provided at at least one end portion, and a lifting-pulling member 57 pivotable about a pivot connection point 56, wherein the lifting-pulling member 57 is configured to be pivotable to any one of a pulled position, a lifted position, and a received position. In this way, the user may pivot the lifting-pulling member 57 to the pulled position and walk by pulling the storage case 24 with the running wheels 37 in contact with the ground surface, for example, as illustrated in the embodiment shown in FIG. 43. The user may pivot the lifting-pulling member 57 to the lifted position to thereby lift the storage case 24, for example, as illustrated in the embodiment shown in FIG. 45. The user may pivot the lifting-pulling member 57 to the received position, thereby reducing the space occupied by the lifting-pulling member 57 to facilitate the storage or stacking of the storage cases 24, for example, as illustrated in the embodiment shown in FIG. 47.

Here, it needs to be appreciated that the third type of storage case 24 of the present disclosure comprises, but is not limited to, the embodiments shown in FIG. 39 through FIG. 48, as long as the lifting-pulling member 57 may be pivoted to any one of the pulled position, the lifted position, and the received position.

In addition, in some embodiments, when the lifting-pulling member 57 is in the pulled position, the lifting-pulling member 57 may extend obliquely upward in a forward direction, i.e., the lifting-pulling member 57 is arranged obliquely with respect to the top surface 240 of the storage case 24. In other embodiments, the lifting-pulling member 57 is parallel to the top surface 240 of the storage case 24 when in the pulled position, thereby facilitating the user to walk more easily by pulling the storage case 24. For example, in FIG. 42, the lifting-pulling member 57 extends horizontally forward as a whole, and in FIG. 43, the lifting-pulling member 57 extends vertically upward as a whole.

Furthermore, when the lifting-pulling member 57 is in the lifted position, the gripping bar 570 of the lifting-pulling member 57 is located at any suitable position of the storage case 24 as long as the user is allowed to lift the storage case 24. For example, in some embodiments, when the lifting-pulling member 57 is in the lifted position, the gripping bar 570 of the lifting-pulling member 57 is located at an end position of the storage case 24. As another example, in some embodiments, when the lifting-pulling member 57 is in the lifted position, the gripping bar 570 of the lifting-pulling member 57 is positioned above a middle portion of the storage case 24, so that when the user lifts the storage case 24, the portions of the storage case 24 on both sides of the gripping bar 570 are balanced, thereby helping the user to lift the storage case 24 in a more balanced and more force-saving manner.

In addition, when the lifting-pulling member 57 is in the received position, the gripping bar 570 of the lifting-pulling member 57 may be located in any suitable position as long as the space occupied by the lifting-pulling member 57is minimized to facilitate storage or stacking of the storage cases 24. For example, in some embodiments, the lifting-pulling member 57 may be adjacent to the top surface 240 of the storage case 24 to maintain a proper space from the top surface 240. For another example, in some embodiments, referring to FIG. 47, when the lifting-pulling member 57 is in the received position, the gripping bar 570 of the lifting-pulling member 57 contacts the top surface 240 of the storage case 24, which may further reduce the space occupied by the lifting-pulling member 57 so that the storage case 24 may be stacked or placed into a suitable storage space. In addition, in some embodiments, the storage case 24 may be formed with a recess (not shown) adapted to the shape of the gripping bar 570, for example, an extended recess is formed in the top surface 240. As such, in the received position, the gripping bar 570 is located within the recess such that the gripping bar 570 is flush with the outer surface of the storage case 24, thereby preventing the gripping bar 570 from protruding from the outer surface of the storage case 24.

In addition, in the storage case 24, the lifting-pulling member 57 may be retained in the pulled position, the lifted position or the received position in various manners. The present disclosure comprises but is not limited to the structures in the embodiments shown in FIG. 43-FIG. 48. For example, in some embodiments, the lifting-pulling member 57 may be disposed on the case body, e.g., the upper case body 33 or lower case body 34, of the storage case 24 via a pivot structure 58. The pivot structure 58 includes but not limited to the structure in the embodiment of FIG. 48. The pivot structure 58 may include a limiting structure (e.g., a releasable ratchet-teeth structure, or a structure of a pin and a plurality of circumferentially-spaced pinholes). The lifting-pulling member 57 is retained and positioned via the limiting structure (e.g., via the ratchet-teeth structure, or by inserting the pin into a pinhole at a corresponding position) when the lifting-pulling member 57 is pivoted to the pulled position, the lifted position or the received position. For another example, in some embodiments, the storage case 24 further comprises a first releasable stop structure 60 which may be independent of the pivot structure 58, and which is configured to retain the lifting-pulling member 57 in the pulled position. As such, through the first releasable stop structure 60, the lifting-pulling member 57 is prevented from pivoting in the pulled position, thereby helping the user to grip the lifting-pulling member 57 conveniently.

In addition, the first releasable stop structure 60 may be of various types including, but not limited to, the structures shown in the embodiments shown in FIG. 43 and FIG. 44. For example, in some embodiments, the first releasable stop structure 60 comprises a releasable pin-pinhole mating structure. One of the pin and pinhole may be formed on the lifting-pulling member 57, and the other of the pin and pinhole may be formed on a case body (e.g., the upper case body 33 or the lower case body 34) of the storage case 24. The lifting-pulling member 57 may be retained in the pulled position when the pin is inserted into the pinhole. When the lifting-pulling member 57 needs to be pivoted to the lifted position or the received position, the pin is removed from the pinhole, and then the lifting-pulling member 57 may be pivoted to the lifted position or the received position.

For another example, in some embodiments, referring to FIG. 43 and FIG. 44, the first releasable stop structure 60 comprises a fixed base 601, a first puller 602, a first stop bar 603, and a first hook 604. The fixed base 601, the first puller 602, the first stop bar 603 and the first hook 604 include, but are not limited to, the structures shown in FIG. 44, wherein the fixed base 601 is disposed to separate from the first hook 604 on the case body such as the lower case body 34 of the storage case 24, the first stop bar 603 is pivotally connected to the first puller 602, the first puller 602 is pivotally disposed on the fixed base 601, and the first puller 602, upon pivoting, can move the first stop bar 603, wherein when the first puller 602 is in a released position, the first stop bar 603 may disengage from the first hook 604, whereupon the lifting-pulling member 57 may be pivoted to the lifted position or pivoted away from the lifted position. For example, when the lifting-pulling member 57 is pivoted to the lifted position, the first stop bar 603 may be allowed to be hung on the first hook 604; when the first puller 602 is pivoted to a locking position, the first stop bar 603 and the first hook 604 are locked, and the lifting-pulling member 57 may be held in the pulled position by the first stop bar 603, as shown in FIG. 44; when the first puller 602 is pivoted reversely to the released position, the first stop bar 603 and the first hook 604 may be unlocked so that the first stop bar 603 can disengage from the first hook 604, thereby allowing the lifting-pulling member 57 to disengage from the first stop bar 603. In this way, the user may conveniently pull the first puller 602 to lock the first stop 603 with the first hook 604 or disengage the first stop 603 from the first hook 604, thereby conveniently retaining and positioning the lifting-pulling member 57 in the lifted position or pivoting the lifting-pulling member 57 away from the lifted position.

In addition, the first stop bar 603 may be a single stop bar, or the first stop bar 103 may comprise a plurality of stop bars connected together. For example, the first stop bar 103 may be a U-shaped stop bar, two lateral bars of the U-shaped stop bar are connected to the first puller 602, and one transverse bar of the U-shaped stop bar may be locked with and unlocked from the first hook 604.

In addition, the fixed base 601 and the first hook 604 may be parts separate from each other and arranged spaced-apart, or the first hook 604 may be fixedly provided on the fixed base 601, or the first hook 604 and the fixed base 601 may be formed as one piece.

Additionally, in some embodiments, the storage case 24 further comprises a second releasable stop structure 61 which may be independent from the pivot structure 58 and may be configured to allow the lifting-pulling member 57 to pivot between the lifted position and received position when cooperating with the lifting-pulling member 57. Thus, the user may pivot the lifting-pulling member 57 to the lifted position to lift the storage case 24, for example, move the storage case 24 to a predetermined position. When the storage case 24 is moved to a position or needs to be stored, the user may pivot the lifting-pulling member 57 to the received position to reduce the space occupied by the lifting-pulling member 57.

Additionally, in some embodiments, the lifting-pulling member 57 may remain positioned in either the lifted position or the received position such that a user needs to manually pull the lifting-pulling member 57 to pivot between the lifted position and received position. Additionally, in some embodiments, the second releasable stop structure 61 is configured to allow the lifting-pulling member 57 to pivot from the lifted position to the received position under the action of its own gravity and to pivot from the received position to the lifted position under the action of a lifting force applied by the user. In this way, the lifting-pulling member 57 may pivot under its own weight from the lifted position to the received position, which can effectively enhance the convenience of use.

In addition, the second releasable stop structure 61 may be of various types including, but not limited to, the structures shown in the embodiments of FIG. 46 and FIG. 48. For example, in some embodiments, the second releasable stop structure 61 comprises a releasable pin-and-pinhole mating structure, one of the pin and the pinhole may be formed on the lifting-pulling member 57 and the other of the pin and pinhole may be formed on a case body (e.g., the upper case body 33 or the lower case body 34) of the storage case 24. The lifting-pulling member 57 may be retained in the received position or lifted position when the pin is inserted into the pinhole. When the lifting-pulling member 57 needs to be pivoted, the pin is removed from the pinhole, and then the lifting-pulling member 57 may be pivoted to the lifted position or the received position.

For another example, in some embodiments, referring to FIG. 46 and FIG. 48, the second releasable stop structure 61 comprises a fixed plate 610, a second puller 611, a second stop bar 612 and a second hook 613. The fixed plate 610, the second puller 611, the second stop bar 612, and the second hook 613 include, but not limited to, the structures shown in FIG. 46 and FIG. 48. The second puller 611 is pivotably disposed at one end of the fixed plate 610, the second hook 613 is disposed at the other end of the fixed plate 610, the second stop bar 612 is pivotally connected to the second puller 611, and the second puller 611 is configured to move the second stop bar 612 upon pivoting, wherein when the second puller 611 is in a released position, the second stop bar 612 is allowed to be hung on the second hook 613, and when the second puller 611 is pivoted to a locking position, the second stop bar 612 and the second hook 613 are locked, so that a holding space 614 is formed between the second stop bar 612 and the fixed plate 610, and the lifting-pulling member 57 can pass through the holding space 614 to pivot between the lifted position and the received position; and wherein, when the second puller 611 is pivoted to the released position, the second stop bar 612 and the second hook 613 are unlocked such that the second stop bar 612 disengages from the second hook 613, thereby enabling the lifting-pulling member 57 to disengage from the holding space 614. The holding space 614 may allow the lifting-pulling member 57 to pivot from the lifted position to the received position under its own weight.

In addition, the second stop bar 612 may be a single stop bar, or the second stop bar 612 may comprise a plurality of stop bars connected together. For example, the second stop bar 612 may be a U-shaped stop bar, two lateral bars of the U-shaped stop bar are connected to the second puller 611, and one transverse bar of the U-shaped stop bar may be locked with and unlocked from the second hook 613.

In addition, the second hook 613 and the fixed plate 610 may be parts separate from each other, or may be formed as one piece.

Further, in the storage case 24 of the present disclosure, the lifting-pulling member 57 may have a fixed length, or have an adjustable length, so that the user or a different user may adjust the length of the lifting-pulling member 57 according to his or her own needs in use. In some embodiments, the lifting-pulling member 57 comprises a plurality of rod sections which are nested in sequence and capable of telescoping, such that the user telescopes the rod sections to adjust the length of the lifting-pulling member 57. In some embodiments, the storage case 24 may include a plurality of lifting-pulling members 57 having different lengths, each of the lifting-pulling members 57 being detachably and pivotally provided on the same pivoting structure, so that the user may replace the lifting-pulling member 57 having a corresponding length according to his/her own needs.

In the embodiment shown in FIG. 43, one end portion of the storage case 24 is provided with the running wheels 37, and the lifting-pulling member 57 is provided at the other end portion of the storage case 24. In other embodiments, the storage case 24 is provided with the running wheels 37 at opposite end portions thereof, respectively, and the storage case 24 comprises two opposite and spaced-apart lifting-pulling members 57 so that the user may operate the lifting-pulling member 57 from either end. In addition, when the lifting-pulling members 57 at both ends are in their respective lifted positions, the user may grasp the lifting-pulling members 57 at both ends with both hands to pull up the storage case 24, or two users may grasp the lifting-pulling members 57 at both ends respectively to lift the storage case 24.

In addition, in the storage case of the present disclosure, the lifting-pulling member 57 may have a plurality of structural types. For example, in one structural type of the lifting-pulling member 57, the lifting-pulling member 57 may be a T-shaped rod. A longitudinal rod section of the T-shaped rod may be a fixed rod section or a telescopic rod section, and the longitudinal rod section may be pivotally connected at an appropriate position of the storage case 24, for example, may be provided on a top portion or an end portion of the upper case body 33, or may be provided at a bottom of the lower case body 34. A transverse rod section of the T-shaped rod may serve as a gripping rod section for the user to grip.

As another example, in one structural type of the lifting-pulling member 57, the lifting-pulling member 57 may be an L-shaped rod. A longitudinal rod section of the L-shaped rod may be a fixed rod section or a telescopic rod section, and the longitudinal rod section may be pivotally connected at an appropriate position of the storage case 24, for example, may be provided on a side of the upper case body 33 or the lower case body 34. A transverse rod section of the L-shaped rod may extend a predetermined length as a gripping rod section for the user to grip.

For another example, in a structural type of the lifting-pulling member 57, referring to FIG. 45, the lifting-pulling member 57 further comprises side rods 571, and one end of the side rods 571 is provided on a side portion of the storage case 24 via a pivot structure 58, so that the lifting-pulling member 57 can pivot; the storage case 24 further comprises a first releasable stop structure 60 and a second releasable stop structure 61 provided on the side portion thereof, the first releasable stop structure 60 is configured to maintain the lifting-pulling member 57 in the pulled position, and the second releasable stop structure 61 is configured to allow the lifting-pulling member 57 to pivot between the lifted position and the received position when the second releasable stop structure 61 engages with the lifting-pulling member 57.

In addition, in some embodiments, referring to FIG. 45, the second releasable stop structure 61 is disposed obliquely upward such that a lifting stop point 615 of the second releasable stop structure 61 is higher than a receiving stop point 616, and the lifting stop point 615 is between the receiving stop point 616 and the pivot connection point 56. In this way, the pivoting range of the lifting-pulling member 57 may be enlarged, so that the lifting-pulling member 57 has a simple structure (e.g., a U-shape as described below); in the lifted position, the lifting-pulling member 57 can be located in the middle of the storage case 24, so that the storage case 24 can be lifted more evenly. In addition, in optional embodiments, the lifting stop point 615 and the receiving stop point 616 may be aligned in a height direction of the storage case 24.

In addition, in some embodiments, the lifting stop point 615 and the receiving stop point 616 may be provided by a stop post disposed on the storage case 24. The stop post serving as the lifting stop point 615 may telescope. When the stop post retracts, the lifting-pulling member 57 may pivot across the lifting stop point 615; when the stop post is extended, the lifting-pulling member 57 is stopped between the two stop posts (i.e., the lifting stop point 615 and the receiving stop point 616).

Additionally, in some embodiments, the lifting stop point 615 and the receiving stop point 616 may be provided by a connection point between the second puller 611 and the second stop bar 612, and an engagement point between the second stop bar 612 and the second hook 613 in a locked state, as shown in FIG. 46 and FIG. 48.

In addition, in some embodiments, referring to FIG. 39-FIG. 48, the lifting-pulling member 57 is a U-shaped member. Two side bars 571 of the U-shaped member are provided at its one end on the opposite side portions of the storage case 24 by means of their respective pivot structures 58, and the other end of the two side bars of the U-shaped member connected by a gripping bar 570. Furthermore, every side portion is provided with a first releasable stop structure 60 and a second releasable stop structure 61. Thus, with the U-shaped member, the user may more evenly pull and lift the storage case 24.

In addition, in some embodiments, in order to further improve the reliability of the upper cased body 33 and lower case body 34 after they are closed, referring to FIG. 27, an edge of an access opening edge of one of the upper case body 33 and lower cases body 34 is formed with a pre-positioning groove 44 extending circumferentially, for example, the pre-positioning groove 44 extends along the locking side portion 28 and the locking end portions 29 on both sides. An edge of an access opening edge of the other of the upper case body 33 and lower case body 44 is formed with a pre-positioning flange 45 extending circumferentially, for example, a thickness of the pre-positioning flange 45 is less than that of a wall of the other of the upper case body 33 and lower case body 44, so that a stop step is thereby formed between the pre-positioning flange 45 and the wall of the other of the upper case body 33 and lower case body 44, and the pre-positioning flange 45 is configured to match with the pre-positioning groove 44. For example, the stop step may contact a groove mouth edge within the pre-positioning groove 44 when the pre-positioning flange 45 extends into the pre-positioning groove 44. In this way, the reliability of closing the upper case body 33 and lower case body 44 may be further improved.

In a second aspect, the present disclosure provides an elastic pad device. Referring to FIG. 23, FIG. 24, FIG. 27 and FIG. 28, the elastic pad device comprises the elastic pad 2 and the storage case 24 according to any solutions described in the above first aspect, wherein the elastic pad 2 is configured to be detachably assembled; wherein the elastic pad 2 is configured such that the elastic pad parts of the disassembled elastic pad 2 can be stored in the storage space and the storage case 24 can be closed, and can be taken out of the storage space and assembled into the elastic pad after the storage case 24 is opened.

Accordingly, after the elastic pad 2 is disassembled, all the elastic pad parts of the elastic pad 2 may be placed in the storage space, and then the storage case 24 may be closed by the lock structure 25. Consequently, the storage case 24 may effectively improve the convenience in storing the elastic pad 2. Meanwhile, by carrying the storage case 24, the user may carry the elastic pad 2 to a desired site according to the user's usage requirements, and the space occupied when the elastic pad 2 is stored may be effectively reduced. When the elastic pad 2 needs to be used, the user may open the storage case 24, take out the respective elastic pad parts and assemble the parts into the elastic pad.

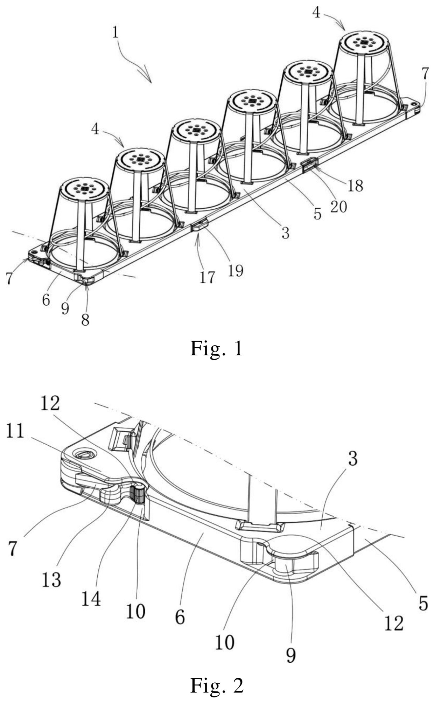

In addition, in the elastic pad device of the present disclosure, in some embodiments, referring to FIG. 1, FIG. 23, FIG. 24, FIG. 25, and FIG. 27, the elastic pad 2 comprises a pad layer 15 and a plurality of elastic module units 1, wherein each elastic module unit 1 comprises a fixed bottom plate 3 formed with a plurality of openings and a plurality of elastic modules 4 that are disposed on the plurality of openings of the fixed bottom plate 3, each elastic module 4 is formed with an inner space, wherein the plurality of elastic modules 4 of one elastic module unit 1 can be respectively embedded into the inner space of the plurality of elastic modules 4 of another elastic module unit 1 through corresponding openings on the fixed bottom plate 3 of the another elastic module unit 1, so that the plurality of elastic module units 1 can be sequentially nested together to form the nested assembly 39, as shown in FIG. 25, wherein the inner space of each elastic module 4 of the lowermost elastic module unit 1 serves as an article-placing space 40 for receiving additional articles, as shown in FIG. 26; the pad layer is configured to be folded from an unfolded state into a folded block 41; the pad layer 15, when unfolded, may be laid on the plurality of elastic modules 4 of an elastic support layer formed by splicing the plurality of elastic module units 1, wherein the nested assembly 39 and the folded block 41 can be placed in the storage space. For example, referring to FIG. 23 and FIG. 24, the folded block 41 may be stacked on the nested component 39, or the nested assembly 39 may be stacked on the folded block 41.

In addition, in some embodiments, referring to FIG. 40, FIG. 41 and FIG. 42, the nested assembly 39, when placed in the storage space, forms a storage gaps 59 from a side wall of the storage space (e.g., a side wall in a width direction or a side wall in a length direction when the storage case is a rectangular parallelepiped, or any side wall when the storage case is a rectangular parallelepiped). For example, in some embodiments, the storage gaps 59 is located in the width direction of the storage case and extends in the length direction of the storage case, and the folded block 41 can be inserted into the storage gaps 59. In this way, the nested assembly 39 and the folded block 41 can limit each other's positions, thereby improving the storage stability.

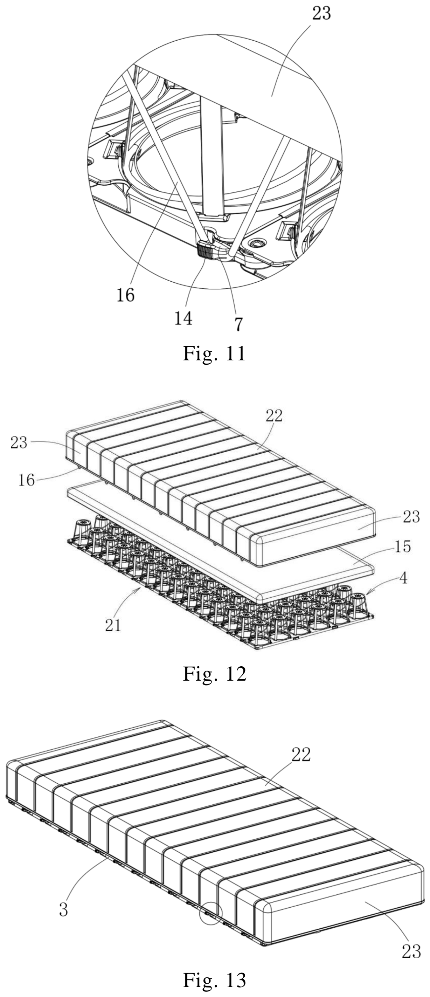

In addition, in some embodiments, referring to FIG. 12, the elastic pad 2 further comprises a cover 22, wherein the cover 22 is configured to be folded from an unfolded state to a folded state to be received in the folded block 41, that is, the cover 22 and the pad layer 15 may be folded and packaged together with binding straps to form the folded block 41, so that the respective parts after the elastic pad is disassembled may be conveniently packaged and stored in the storage case 24.

Further, in other embodiments, referring to FIG. 28, the folded block 41 is a U-shaped block 42 that wraps an elastic module portion 43 of the nested assembly 39, and is then placed into the storage space of the storage case 24.

Furthermore, in some embodiments, in order to improve the stability in storing the elastic pad 2, a recess (not shown) is formed on a bottom wall of the storage space, and the nested assembly 39 is received and retained in the recess on the bottom wall of the storage space at least via the bottom thereof, so that the stability in storing the elastic pad 2 may be further improved by the retention of at least the bottom of the nested assembly 39 by the recess

In addition, in some embodiments, referring to FIG. 1-FIG. 8, the elastic pad comprises a plurality of elastic module units 1. Each elastic module unit 1 comprises a fixed bottom plate 3 and a plurality of elastic modules 4 disposed on the fixed bottom plate 3. The fixed bottom plate 3 comprises splicing sides 5 arranged opposite to each other and end sides 6 arranged opposite to each other. Each end side 6 includes a plurality of connectors. The connector includes at least one of a rotary detent member 7 and an engagement member 8, where the rotary detent member 7 is configured to swing to and fro about a pivot axis so that it releasably engages an engagement member 8 of an adjacent elastic module unit 1, and the engagement member 8 is configured to releasably engage with a rotary detent member 7 of an adjacent elastic module unit 1.

As such, the fixed bottom plate 3 comprises end sides 6 arranged opposite to each other, each end side 6 includes a plurality of connectors, the plurality of connectors comprise at least one of the rotary detent member 7 and the engagement member 8, the rotary detent member 7 is configured to swing to and fro about a pivot axis so that it releasably engages an engagement member 8 of an adjacent elastic module unit 1, and the engagement member 8 is configured to releasably engage a rotary detent member 7 of an adjacent elastic module unit 1. In the circumstance, when the elastic module units 1 are assembled into the elastic pad 2, splicing sides 5 of a plurality of fixed bottom plates 3 are spliced sequentially, and the adjacent bottom fixed bottom plates 3 are connected by engagement of the rotary detent member 7 and the engagement member 8 of the two adjacent fixed bottom plates. In this way, all the fixed bottom plates 3 can be spliced by engagement of the rotary detent member 7 and the engagement member 8 so that a plurality of elastic module units 1 can be assembled into an elastic support layer 21 of the elastic pad 2. Therefore, the elastic module units 1 can significantly improve the convenience in assembling of the elastic pad 2, and can facilitate detachment for storage, thereby effectively reducing the storage space of the elastics pad.

It needs to be appreciated that the elastic module unit 1 according to the present disclosure may be of multiple types. For example, for a first type of elastic module unit 1, some elastic module units 1 where end sides 6 of fixed bottom plates 3 include a plurality of rotary detent members 7 are used as a first elastic module unit, and some other elastic module units 1 where end sides 6 of fixed bottom plates 3 include a plurality of engagement members 8 are used as a second elastic module unit. As such, the plurality of engagement members 8 of the second elastic module unit can engage rotary detent members 7 of a preceding adjacent first elastic module unit and rotary detent members 7 of a following first elastic module unit, and so on. Accordingly, a plurality of elastic module units 1 can be assembled together.

For another example, for a second type of elastic module unit 1, referring to FIGS. 1-7, each end side 6 of the fixed bottom plate 3 of the elastic module unit 1 is provided with a rotary detent member 7 and an engagement member 8. In the circumstance, a rotary detent member 7 of an elastic module unit 1 engages an engagement member 8 of a preceding adjacent elastic module 1, and an engagement member 8 of the elastic module unit 1 engages a rotary detent member 7 of a following adjacent elastic module unit 1, and so on. Therefore, a plurality of elastic module units 1 can be assembled together.

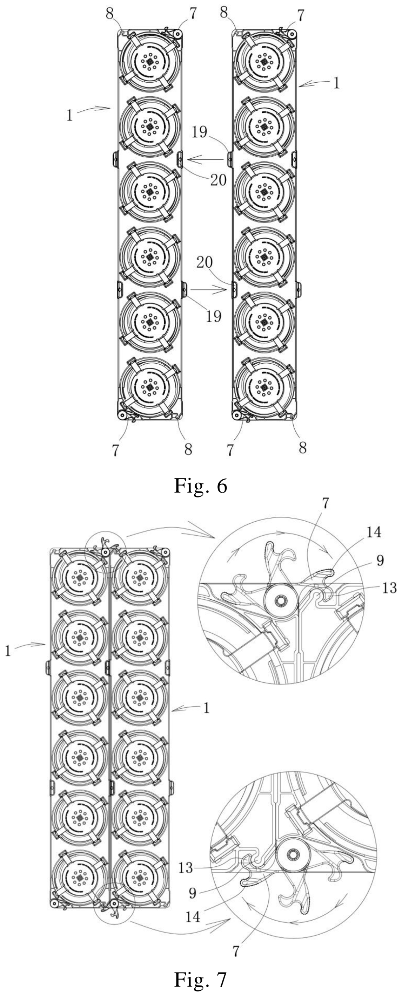

In addition, the connectors may be disposed at any position of the end side 6. For example, in some embodiments, connectors may be disposed at the middle position of the end side 6, or may be disposed at other position of the end side 6 close to the middle position. For another example, in some other embodiments, referring to FIG. 6, the corners of each end side 6 are respectively provided with connectors, for example, one of the plurality of connectors is disposed at a corner of each of the end sides 6. In this way, this can make full use of the corner of the end side 6 for arrangement of connectors, and facilitate a connection between adjacent fixed bottom plates 3.

In addition, as described above, in the second type of elastic module unit 1, the end side 6 of the fixed bottom plate 3 of the elastic module unit 1 includes a rotary detent member 7 and an engagement member 8. Therefore, in some embodiments, referring to FIG. 6, each of the end sides is provided with the rotary detent member and the engagement member, for example, the corners of each end side 6 are respectively provided with a rotary detent member 7 and an engagement member 8.

In addition, in some embodiments, in order to improve the connection convenience among a plurality of fixed bottom plates 3, the rotary detent members 7 disposed at the two end sides 6 arranged opposite to each other are located on one of diagonals of the elastic module unit 1, and the engagement members 8 disposed at the the two end sides arranged opposite to each other are located on the other of the diagonals of the elastic module unit 1, the rotation direction of the rotary detent members 7 are identical. Referring to FIGS. 6 and 7, the rotary detent members 7 of any two fixed bottom plates 3 can rotate in the same rotation direction to thus connect any two fixed bottom plates 3.

In addition, in other embodiments, the rotary detent members 7 may differ in rotation direction.

In addition, in the elastic module unit 1 according to the present disclosure, the engagement member 8 may be of multiple types of structures. For example, for a structure type of engagement member 8, the engagement member 8 may be a rotary engagement member 7. In this way, rotary engagement members 7 of adjacent fixed bottom plates 3 can engage. For another example, for another structure type of engagement member 8, referring to FIGS. 2, 4 and 7, the engagement member 8 includes a snap-in post 9. When the rotary engagement member 7 engages the snap-in post 9, adjacent fixed bottom plates 3 are connected, and when the rotary engagement member 7 disengages from the snap-in post 9, the adjacent fixed bottom plates 3 are disconnected.

In addition, in some embodiments, referring to FIG. 2, FIG. 4 and FIG. 6, a receiving groove 10 for receiving connectors is formed on a peripheral side surface of each corner of the fixed bottom plate 3. In the circumstance, the connectors, such as the rotary detent member 7 and the engagement member 8, may be located in the respective corresponding receiving grooves 10, to prevent most of the connectors from being exposed from the circumferential side surface of the fixed bottom plate 3.

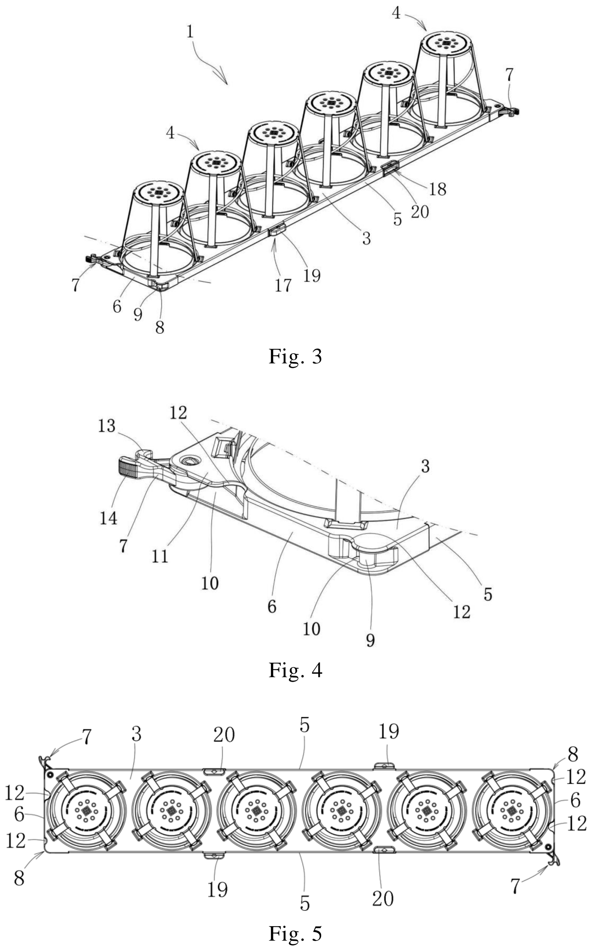

In addition, In some embodiments, referring to FIGS. 2 and 4, the receiving groove 10 may include an upper side wall 11, i.e., a receiving groove 10 extending transversely is formed on the circumferential side surface of the corner of the fixed bottom plate 3. At this time, an operating opening 12 enabling a user to apply a force to rotate the rotary detent member 7 is formed on the upper side wall 11. When connecting the respective fixed bottom plates, the operator can conveniently drive the rotary detent member 7 via the operating opening 12.

In addition, in some embodiments, referring to FIG. 6, the receiving groove 10 may not include an upper side wall 11, i.e., a receiving recess is formed in the corner of the upper surface of the fixed bottom plate 3, the receiving recess extends outwards to the circumferential side surface of the fixed bottom plate to be used as the receiving groove 10, and at this time, the connectors, such as a rotary detent member 7 and an engagement member 8, may be located in the respective corresponding receiving recess.

In addition, the rotary detent member 7 may be of multiple structures. For example, in some embodiments, referring to FIGS. 2, 4 and 7, the rotary detent member 7 comprises a detent hook 13 and a peg 14, the detent hook 13 is configured to be releasably snapped to an engagement member 8 of an adjacent elastic module unit 1. Wherein, the rotary detent member 7 has a storage position and an engagement position. In the storage position, the peg 14 is located within the receiving groove 10, and a part of the detent hook 13 extends laterally out from the receiving groove 10, so that an operator can conveniently operate the detent hook 13 via a part of the detent hook 13 to drive the rotary detent member 7 to rotate. In the engagement position, the detent hook 13 is located within the receiving groove of the adjacent elastic module unit, and a part of the peg 14 extends laterally out from the receiving groove 10 of the adjacent elastic module unit, so that an operator can conveniently operate the peg 14 via a part of the page 14 to drive the rotary detent member 7 to rotate.

In addition, in some embodiments, referring to FIG. 7, the rotary detent member 7 is configured to hook a connection rope 16 fixed on a pad layer 15 of the elastic pad 2. By hooking the connection rope 16 onto the rotary detent member 7, the elastic pad can form an elastic pad 2 without enclosed sides. Since no enclosed sides (that is sealed sidewall) are provided, the elastic pad 2 has a permeable or breathable inner structure having excellent ventilation performance, thus improving the breathability and comfort of the elastic pad 2. When it is required to store the elastic pad 2, the connection rope 16 and the rotary detent member 7 are released, and the respective fixed bottom plates 3 are disconnected from each other, enabling fast and convenient detachment for storage. This can effectively facilitate transportation of the elastic pad and reduce the storage space. In addition, the connection rope 16 may be a separate connection rope, or may be a part of a mesh rope of a mesh sidewall.

In addition, in some embodiments, the rotary detent member 7 is configured to releasably hook the corresponding connection rope 16 on the cover 22. By hooking the connection rope 16 onto the rotary detent member 7, the elastic pad can form an elastic pad 2 without enclosed sides. Since no enclosed sides are provided, the elastic pad 2 has a permeable or breathable inner structure having excellent ventilation performance, thus improving the breathability and comfort of the elastic pad 2. When it is required to store the elastic pad 2, the connection rope 16 and the rotary detent member 7 are released, and the respective fixed bottom plates 3 are disconnected from each other, enabling fast and convenient detachment for storage. This can effectively facilitate transportation of the elastic pad and reduce the storage space. In addition, the connection rope 16 may be a separate connection rope, or may be a part of a mesh rope of a mesh sidewall.

In addition, the rotary detent member 7 may be of multiple types. Irrespective of type, the rotary detent member 7 can be used as long as it can hook the connection rope 16. For example, in some embodiments, referring to FIG. 7, the rotary detent member 7 comprises a detent hook 13 and a peg 14, where the detent hook 13 is configured to be releasably snapped to the engagement member 8 of an adjacent elastic module unit 1. Wherein, the rotary detent member 7 includes a storage position and an engagement position. In the storage position, the detent hook 13 releasably hooks the corresponding connection rope 16, for example, the peg 14 is located within the receiving groove 10, and the detent hook 13 is configured to hook the connection rope 16 (e.g. a part of the detent hook 13 extends laterally out from the receiving groove 10 to hook the connection rope 16). In the engagement position, the peg 14 releasably hook the corresponding rope 16, for example, the detent hook 13 is located within the receiving groove of the adjacent elastic module unit, and the detent hook 14 is configured to hook the connection rope 16, e.g., a part of the peg 14 extends laterally out from the receiving groove 10 of the adjacent elastic module unit to hook the connection rope 16.

In addition, in some embodiments, in order to improve the splicing accuracy and convenience of the respective fixed bottom plates 3, referring to FIG. 1, FIG. 3, FIG. 5 and FIG. 6, each of the splicing sides 5 is formed to have a pre-positioning structure, i.e. a pre-positioning structure is formed on each splicing side 5, the pre-positioning structure is configured to engage a pre-positioning structure on a splicing side 5 of a fixed bottom plate 3 of an adjacent elastic module unit 1. As such, when a plurality of elastic module units are spliced, the pre-positioning structures of the fixed bottom plates 3 of the adjacent elastic module units engage each other to pre-position the respective fixed bottom plates 3, and the rotary detent member 7 and the engagement member 8 of the adjacent fixed bottom plates 3 then engage each other.

In addition, the pre-positioning structure may be of multiple types. Irrespective of type, the pre-positioning structure can be used as long as it can pre-position the adjacent fixed bottom plates 3. For example, in some embodiments, referring to Figs. 1 and 3, the pre-positioning structure comprises a first pre-positioning structure 17 and a second pre-positioning structure 18 that are spaced apart in the extending direction of the splicing side, the second pre-positioning structure 18 being different from the first pre-positioning structure 17, wherein the first pre-positioning structure 17 is configured to engage with a second pre-positioning structure 18 of an adjacent elastic module unit 1, and the second pre-positioning structure 18 is configured to engage with a first pre-positioning structure 17 of an adjacent elastic module unit 1. With the engagement of the first pre-positioning structure 17 and the second pre-positioning structure 18 of adjacent fixed bottom plates, the pre-positioning balance of adjacent fixed bottom plates can be further improved.

In addition, in some embodiments, the second pre-positioning structure 18 is identical to the first pre-positioning structure 17.

In addition, in some embodiments, referring to FIG. 5, the first pre-positioning structure 17 located at one side of the elastic module unit and the second pre-positioning structure 18 located at the other side are aligned with each other in a transverse direction of the elastic module unit (i.e., the height direction of FIG. 5, or the width direction of the fixed bottom plate 3 when the fixed bottom plate 3 is rectangular), the second pre-positioning structure 18 located at one side of the elastic module unit and the first pre-positioning structure 17 located at the other side are aligned with each other in the transverse direction of the elastic module unit. When adjacent fixed bottom plates 3 are spliced, it is only required to align the fixed bottom plates 3 with each other, to further improve the convenience in pre-positioning engagement.

In addition, the first pre-positioning structure 17 and the second pre-positioning structure 18 may be engageable hook and groove structures, respectively. Alternatively, referring to Figs. 1, 3 and 5, the first pre-positioning structure 17 is a pre-positioning bump 19, and the second pre-positioning structure 18 is a pre-positioning groove 20. When adjacent fixed bottom plates 3 are spliced, it is only required to align the fixed bottom plates 3 with each other, the pre-positioning bump 19 is then embedded into the pre-positioning groove 20 upon pushing the fixed bottom plates 3, and the adjacent fixed bottom plates 3 are pre-positioned and engaged.

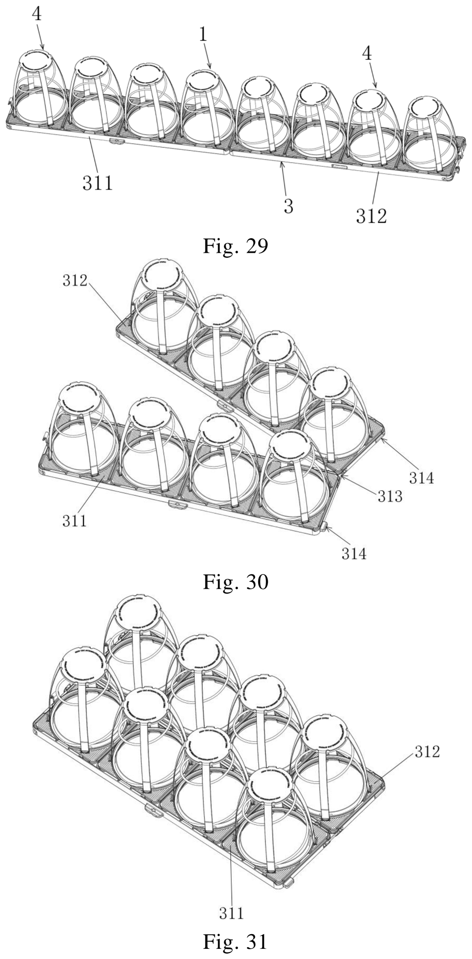

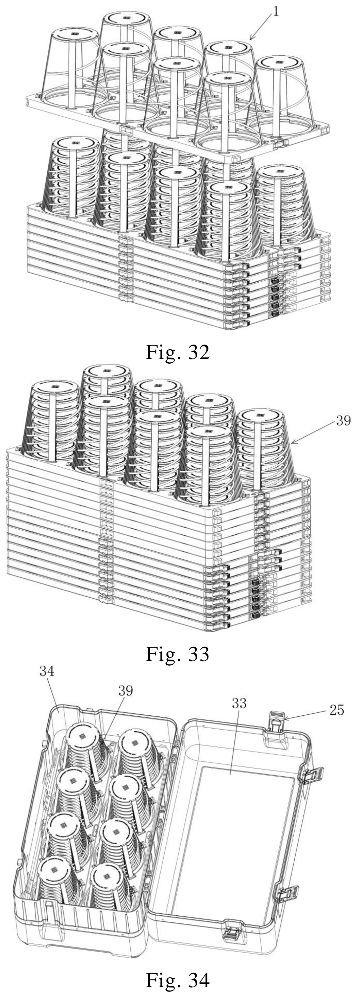

In addition, in some embodiments, referring to FIG. 1, the elastic module unit 1 may be an integral elongated unit, for example, the fixed bottom plate 3 of the elastic module unit 1 is an integral elongated plate. Furthermore, in some embodiments, referring to FIG. 29, the length of the elastic module unit 1 may be changed, that is, the length of the fixed bottom plate 3 of the elastic module unit 1 may be changed, so that the length of the fixed bottom plate 3 of the elastic module unit 1 may be adjusted according to the size of the inner space of the storage case. For example, in some embodiments, with reference to FIGS. 29-33, the fixed bottom plate 3 of the elastic module unit 1 comprises a first plate portion 311 and a second plate portion 312 arranged in a lengthwise direction thereof, wherein a plurality of elastic modules 4 are provided on the first plate portion 311 and the second plate portion 312, respectively, wherein an end of the first plate portion 311 and the second plate portion 312, facing toward each other, are connected together by a hinge structure 313 at its one side, and the other side of the end of the first plate portion and the second plate portion, facing toward each other is disposed with a releasable connecting structure 314, wherein in a first position, the connecting structure 314 is not released, thereby splicing wide sides of the first plate portion 311 and the second plate portion 312 together, as shown in FIG. 29. When the connecting structure is released, the first plate portion 311 and the second plate portion 312 may be pivoted from the first position to a second position, as shown in FIG. 30. In the second position, long sides of the first plate portion 311 and the second plate portion 312 are spliced together, as shown in FIG. 31. Thus, referring to FIG. 32, a plurality of elastic module units 1 in the second position may be nested sequentially to form the nested assembly 39, as shown in FIG. 33. Such a nested assembly 39 may be placed directly into the storage case, as shown in FIG. 34. Alternatively, in other storage manners, a plurality of elastic module units 1 in the second position may be sequentially nested and stacked in the storage case, as shown in FIG. 35.

In addition, the hinge structure 313 and the connection structure 314 may in various types, as long as the above depictions can be implemented regardless of which type is employed. For example, in one type, the hinge structure 313 is a hinge structure, or a pivoting assembly including an intermediate connection plate and a pivot shaft. The connection structure 314 is a catching block and a catching groove, or a hook-and-loop. For example, the catching block and catching groove may be formed in the first plate portion 311 and the second plate portion 312; when the catching block is caught in the catching groove, the first plate portion 311 and the second plate portion 312 are connected in the first position; when the catching block disengages from the catching groove, the first plate portion 311 and the second plate portion 312 disengage from each other to pivot from the first position to the second position.

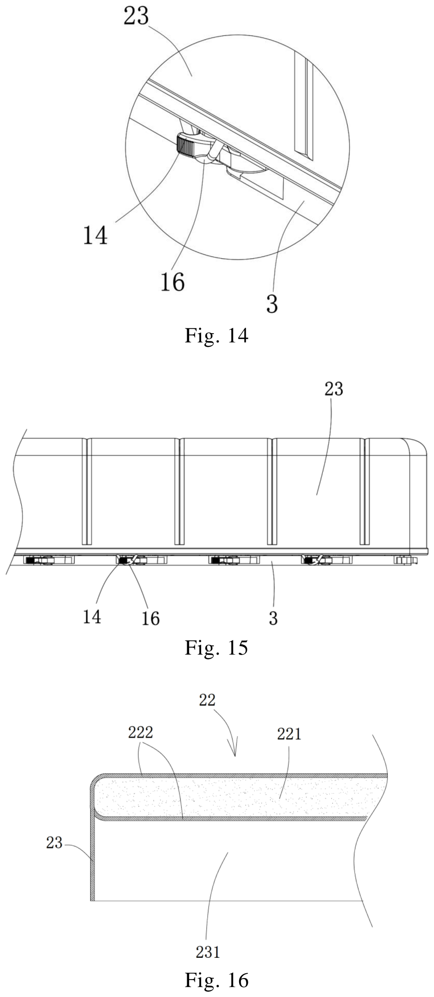

In addition, in some embodiments, with reference to FIG. 16 and FIG. 17, the elastic pad 2 further comprises a cover 22 comprising at least one inner core layer 221, an outer wrapping sleeve 222 and a stop fold 23, wherein the at least one inner core layer 221 comprises an elastic material layer, which may be a sponge layer, a silicone layer or any other elastic layer; the outer wrapping sleeve 222 may releasably wrap the at least one inner core layer 221 in any manner; the stop fold 23 is folded downward from the peripheral edge of the cover 22 in a thickness direction of the elastic pad 2 and extends a predetermined distance to form an inner space 231 capable of receiving and shielding the pad layer 15 of the elastic pad 2, wherein the cover 22 can be received in the storage space after being folded.

Since the at least one inner core layer 221 of the cover 22 comprises an elastic material layer, the elastic support performance of the cover 22 may be effectively improved, and the support performance and comfort of the elastic pad may be further improved; in addition, since the outer wrapping sleeve 222 detachably wraps the at least one inner core layer 221, when cleaning is required, only the outer wrapping sleeve 222 needs to be detached and cleaned; in addition, the stop fold 23 extends at the peripheral edge of the cover 22 to form the inner space 231 to receive and shield the pad layer 15 of the elastic pad 2 when the elastic pad 2 is assembled, thereby improving the convenience in assembling the elastic pad 2, and effectively reducing the space occupied when the elastic pad 2 is stored.

In addition, under the tightening action of the edge connection structure described below, the stop fold 23 may be in a downward-extending tensioned state so as to abut and stop the outermost elastic module 4, thereby effectively preventing the movement of the outermost elastic module 4 in a transverse direction of the elastic pad, and improving the stability of the elastic module.

In this cover 22, in some embodiments, the stop fold 23 may be a separate part and may be connected to the peripheral edge of the outer wrapping sleeve 222 by various means such as sewing, welding, zippers, snaps, or the like.

In addition, in some embodiments, referring to FIG. 16, the stop fold 23 is formed in a way that a portion of the outer wrapping sleeve 222 is folded downward from the peripheral edge of the cover 22 and extends a predetermined distance, that is, the stop fold 23 and the outer wrapping sleeve 222 are integrally formed, so that the portion of the peripheral edge folded downward may be restrained by the integrity of the portion of the outer wrapping sleeve 222 wrapping at least one inner core layer 221, thereby improving the stability of the stop fold 23.

In addition, in some embodiments, referring to FIG. 17, the at least one inner core layer 221 is folded down from the peripheral edge of the cover 22 and extends a predetermined distance so as to form a folded layer 2211, and the outer wrapping sleeve 222 is folded down from the peripheral edge of the cover 22 and extends a predetermined distance so as to form a folded sleeve 2221, wherein the folded sleeve 2221 wraps the folded layer 2211 to form the stop fold 23. Thus, by means of the folded layer 2211 and the folded sleeve 2221 wrapping the folded layer 2211, the strength of the stop fold 23 itself may be further enhanced to further enhance the reliability of positioning the pad layer stored in the inner space 231.

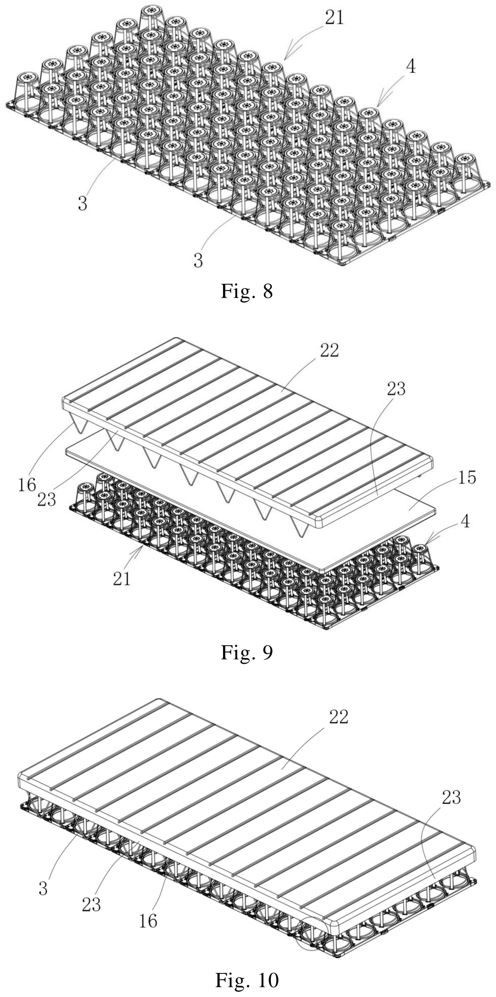

In addition, in some embodiments, referring to FIG. 10, FIG. 11, and FIG. 13-15, the cover 22 further comprises an edge connection structure configured to connect with a bottom layer of the elastic pad. In this way, after the edge connection structure is connected with the bottom layer of the elastic pad, the edge connection structure may further straighten and tighten the stop fold 23, thereby further improving the stop effect of the stop fold 23.

Additionally, the edge connection structure may be in various types. For example, in some embodiments, the edge connection structure may be a zipper structure whose assembly is disposed between the stop fold 23 and the bottom layer of the elastic pad. As another example, in other embodiments, the stop fold 23 and the edge connection structure jointly form the elastic pad 2 without a sealed sidewall. In this way, since no enclosed side walls are provided, the elastic pad 2 has a permeable or breathable inner structure having excellent ventilation performance, thus improving the breathability and comfort of the elastic pad 2.

In addition, the edge connection structure may be of multiple structures. Irrespective of the type, the edge connection structure can be applied as long as it can connect the fixed bottom plates and the cover 22, making it possible to form an elastic pad without enclosed sides. For example, for a type of the edge connection structure, the edge connection structure may be a mesh body. In the circumstance, through a plurality of meshes of the mesh body, the breathability of the elastic pad 2 can be improved. For another type of the edge connection structure, referring to Figs. 11 and 14, the edge connection structure includes a plurality of connection ropes 16 arranged spaced-apart in the peripheral direction of the elastic pad. For example, the connection ropes 16 may be connected at the edge of the cover 22. For instance, the connection ropes 16 are connected on the stop fold 23. Accordingly, the connection ropes 16 only needs to be connected with the bottom layer (e.g., the fixed bottom plates 3) of the elastic pad. In addition, the connection ropes 16 may be a plurality of rope loops independent of each other and arranged at an interval, or may extend continuously in a wavy manner.

Additionally, in some embodiments, all the top folds 23 are connected to the bottom layer of the elastic pad by the edge connection structure. In other embodiments, referring to FIG. 10 and FIG. 12, at least two opposing stop folds 23 of the stop folds 23 are connected to the bottom layer of the elastic pad by the edge connection structure, so that the step of assembling the elastic pad may be effectively simplified and the assembling convenience may be improved while ensuring the reliability of the connection of the cover 22.

In addition, referring to FIG. 10 and FIG. 13, the stop folds 23 extend close to the bottom layer of the elastic pad and are spaced apart a predetermined distance from the bottom layer of the elastic pad, and the length of the stop fold 23 is set so as to shield at least a part or all of the height of the elastic module 4, so that the aesthetics of the elastic pad may be effectively improved while the breathability of the elastic pad is ensured.

In addition, in some embodiments, the pad layer 15 may be a single-layer pad layer, such as a single-layer sponge layer or a single-layer silica gel layer. In other embodiments, referring to FIG. 18, the pad layer 15 comprises a plurality of inner layers stacked in the thickness direction of the pad layer, and an outer sleeve 151 detachably wrapping the plurality of inner layers. The plurality of inner layers comprise an inner elastic layer 152 and an inner flexible layer 153. Preferably, the inner elastic layer 152 is positioned above the inner flexible layer 153 in the thickness direction of the pad layer. As such, the inner elastic layer 152 may provide a good elastic supporting effect, and the inner flexible layer 153 may stably and reliably contact the elastic modules below, and improve the durability.

In addition, the elastic support layer 21 may be of various types. For example, in some embodiments, the elastic support layer 21 may include a unitary bottom layer and a plurality of elastic modules 4 disposed on the unitary bottom layer. For another example, in other embodiments, with reference to FIG. 1-FIG. 8, the elastic pad comprises a plurality of elastic module units 1, each elastic module unit 1 comprises a fixed bottom plate 3 and a plurality of elastic modules 4 disposed on the fixed bottom plate 3. The fixed bottom plate 3 comprises splicing sides 5 arranged opposite to each other and end sides 6 arranged opposite to each other. Each end side 6 includes a plurality of connectors. The connector includes at least one of a rotary detent member 7 and an engagement member 8, wherein the rotary detent member 7 is configured to swing to and fro about a pivot axis so that it releasably engages an engagement member 8 of an adjacent elastic module unit 1, and the engagement member 8 is configured to releasably engage a rotary detent member 7 of an adjacent elastic module unit 1, wherein the plurality of fixed bottom plates 3 are spliced together by the engagement of the adjacent rotary detent members 7 and the engagement members 8, so that the plurality of elastic module units 1 are assembled into the elastic support layer 21.

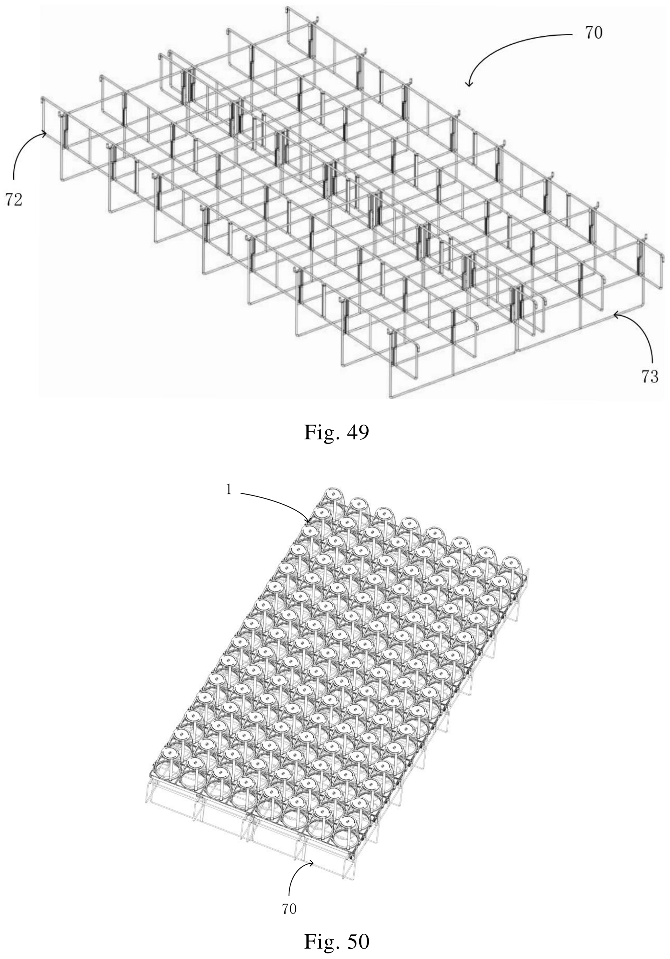

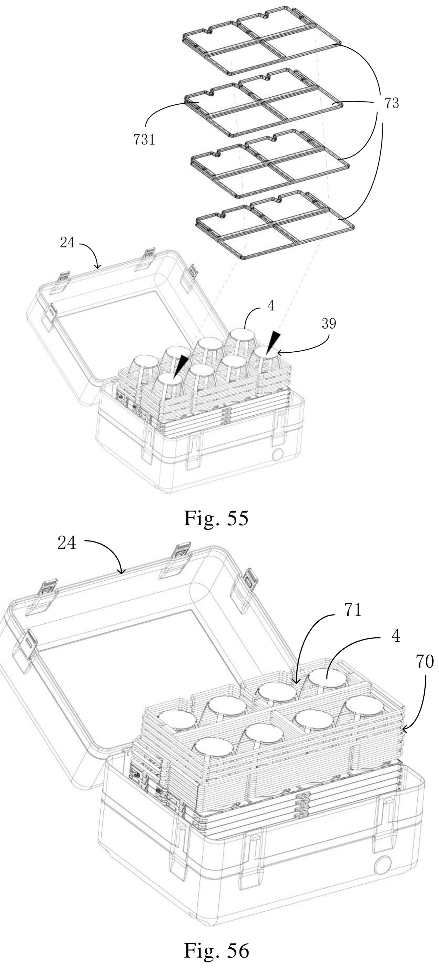

In addition, in the elastic pad device of the present disclosure, in some embodiments, the elastic pad 2 may be placed directly on the ground for use, such as on indoor ground, outdoor ground, grass, etc. Optionally, in some embodiments, referring to FIG. 49, FIG. 50 and FIG. 56, the elastic pad device further comprises a support frame 70 configured to have a flat state where the elastic pad 2 can be laid on the support frame 70 and a storage state where the support frame 70 can be received in the storage space and the storage case 24 may be closed. In this way, the user may directly place the elastic pad 2 on the ground for use, or may arrange the support frame 70 into the flat state and place the elastic pad 2 on the support frame 70 according to his/her own needs. By means of the support frame 70, not only the use height may be increased, but also the elastic pad 2 may be spaced apart from the ground to have an effective moisture-proof function when the ground is moist. After the user has finished using, the support frame 70 may be arranged in the storage state and placed in the storage case 24 for easy carrying, thereby effectively improving the convenience of use and reducing the space occupied when the support frame 70 is stored.

Certainly, the support frame 70 in the storage state may be placed at any suitable position of the storage case 24. For example, the support frame 70 may be placed at the bottom of the storage case 24, or may be vertically inserted in a spacing between the elastic pad parts and the sidewall of the storage case 24, for example, in the above-mentioned storage gaps 59 shown in FIG. 59. Alternatively, the support frame 70 may lie flat on the elastic pad parts.

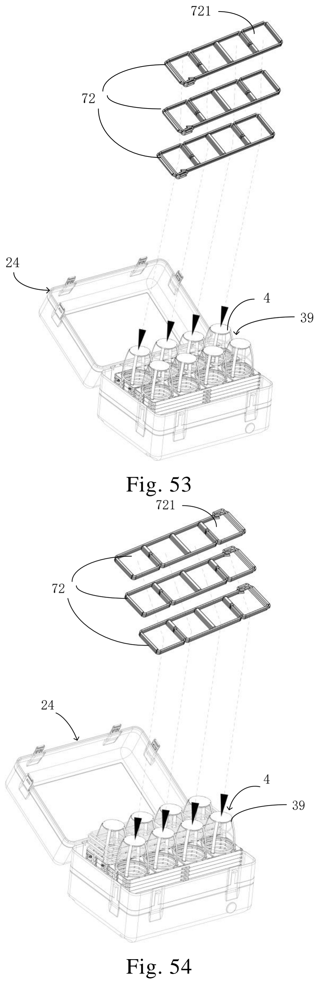

For example, in some embodiments, with reference to the example shown in FIG. 53-FIG. 56, the plurality of elastic module units 1 of the elastic pad 2 may be sequentially nested together to form the nested assembly 39 that can be placed in the storage space in a manner of its horizontally-spaced plurality of elastic modules 4 being oriented upward; the support frame 70 in the storage state has a plurality of horizontally-spaced through-spaces 71 that are horizontally spaced from each other and can be placed on the nested assembly 39 such that the elastic modules 4 are received in the corresponding through-spaces 71. In this way, the space around the elastic modules 4 may be effectively used to store the support frame 70, thereby reducing the additional large space occupied by the support frame 70; meanwhile, since the elastic modules 4 are located in the through-spaces 71, the elastic modules 4 can also limit the support frame 70, thereby avoiding unnecessary large transverse displacement of the support frame 70 in the storage case 24.

Certainly, in the elastic pad device according to the present disclosure, the support frame 70 may have various structures, as long as the support frame 70 can be placed in the storage case 24 when it is arranged in the storage state regardless of the structure of the support frame 70. For example, in some embodiments, the support frame 70 may have the through-spaces 71 when the support frame 70 is arranged from the flat state to the storage state.

The support frame 70 of the present disclosure comprises, but is not limited to, the example shown in FIG. 49. For example, in some embodiments, referring to FIG. 49, FIG. 51a and FIG. 52a, the support frame 70 comprises a plurality of longitudinal support members 72 and a plurality of transverse support members 73 detachably assembled together, wherein each longitudinal support member 72 comprises a plurality of first through-spaces 721 that are spaced apart from each other, each first through-space 721 configured to receive at least one elastic module 4; each transverse support member 73 comprises a plurality of second through-spaces 731 spaced apart from each other and configured to receive at least two elastic modules 4. Thus, when the support frame 70 needs to be stored, the support frame 70 may be split into the plurality of longitudinal support members 72 and the plurality of transverse support members 73, and then the plurality of longitudinal support members 72 and the plurality of transverse support members 73 are sequentially stacked on the nested assembly 39 such that the elastic modules 4 are received in the first through-spaces 721 and the second through-spaces 731.

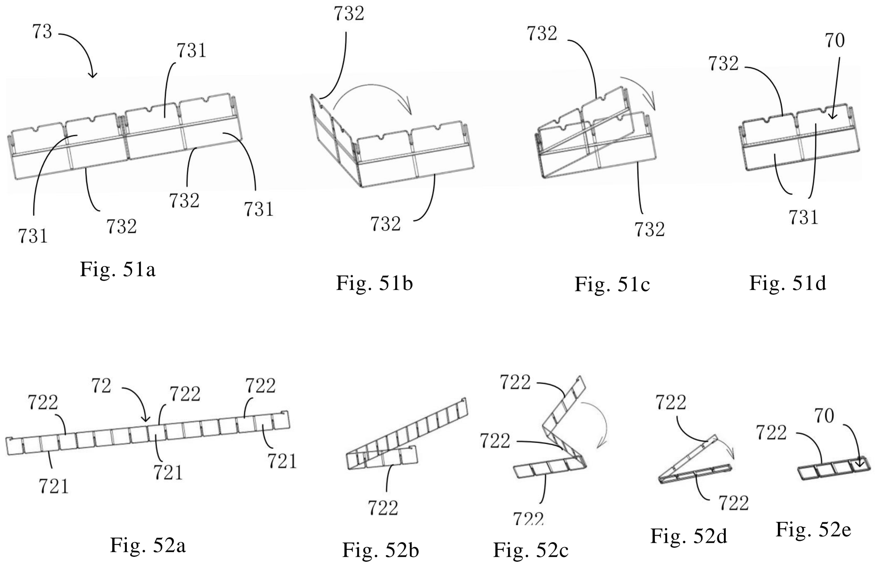

Further, it should be noted herein that the longitudinal support members 72 and the transverse support members 73 include, but are not limited to, the structures shown in FIG. 51a and FIG. 52a, and therefore, the longitudinal support members 72 and the transverse support members 73 may have other structures. In addition, as used herein, "longitudinal" and "transverse" are used merely to indicate directions and do not denote the length of the relevant support members. In addition, the longitudinal support members 72 and the transverse support members 73 may have a predetermined length. In addition, the plurality of first through-spaces 721 on each longitudinal support member 72 may be arranged in one column in the longitudinal direction, as shown in FIG. 52a, or may be arranged in a plurality of columns, such as two columns, in the longitudinal direction. Likewise, the plurality of second through-spaces 731 on each transverse support member 73 may be arranged in one or more rows in the transverse direction, for example, two rows as shown in FIG. 51a.

Additionally, in some embodiments, the longitudinal support member 72 may be formed as a single piece and the transverse support member 73 may be formed as a single piece.

In addition, in some embodiments, each longitudinal support member 72 comprises a plurality of longitudinal support sections 722 connected sequentially together in the longitudinal direction, and the plurality of longitudinal support sections 722 can be stacked together such that the first through-spaces 721 of the plurality of longitudinal support sections 722 overlap. In this way, the user may conveniently unfold or overlap the plurality of longitudinal support sections 722, thereby allowing the longitudinal support members 72 to have a desired length when unfolded and reducing the storage space when overlapped. And/or, each transverse support member 73 comprises a plurality of transverse support sections 732 sequentially connected together in the transverse direction, and the plurality of transverse support sections 732 may be stacked together such that the second through-spaces 731 of the plurality of transverse support sections 732 overlap. As such, the user may conveniently unfold or overlap the plurality of transverse support sections 732, thereby allowing the transverse support members 73 to have a desired length when unfolded and reducing the storage space when overlapped.

In addition, in some embodiments, the plurality of longitudinal support sections 722 and/or the plurality of transverse support sections 732 may be sequentially coupled together in a variety of detachable manners, such as a snap fit or a threaded connection.

In addition, in some embodiments, the plurality of longitudinal support sections 722 are rotatably coupled together sequentially in the longitudinal direction, as shown in FIG. 52a-FIG. 52e. In FIG. 52a, the longitudinal support members 72 are shown in an unfolded state. When the longitudinal support members 72 needs to be received, each longitudinal support section 722 is folded reversely sequentially, as shown in FIG. 52b-FIG. 52d. Finally, the plurality of longitudinal support sections 722 are stacked together to form a folded member, as shown in FIG. 52e. Each folded member may then be nested sequentially on the elastic module 4 of the nested assembly 39. And/or, in some embodiments, a plurality of transverse support sections 732 are rotatably connected together sequentially in a transverse direction, as shown in FIG. 51 a-FIG. 51d. In FIG. 51a, the transverse support members 73 are in an unfolded state. When the transverse support members 73 need be received, each transverse support member 732 is folded reversely sequentially, as shown in FIG. 51b and FIG. 51c. Finally, the plurality of transverse support members 732 are stacked together to form a folded member, as shown in FIG. 51d. Each folded member may then be nested sequentially on the elastic module 4 of the nested assembly 39. In this sequentially rotatable manner, the user may conveniently receive and unfold the longitudinal support members 72 and/or transverse support members 73, improving the convenience and efficiency of assembly and disassembling the support frame 70. In addition, there may be many types of rotatable connection manners, including but not limited to, rotational connection via a hinge, or pin-shaft rotational connection.

In addition, in the support frame 70 of the present disclosure, in some embodiments, the longitudinal support members 72 and transverse support members 73 may have the same height, be arranged at an interval upon use, and be sequentially connected together.

In addition, in some embodiments, the height of each longitudinal support member 72 may be less than that of each lateral support member 73. In use, the transverse support members 73 may arranged at an interval in the longitudinal direction to contact the ground, and the longitudinal support members 72 may be inserted at an interval on all transverse support members 73 in the transverse direction and at a distance from the ground, as shown in FIG. 49.

In addition, in the support frame 70 of the present disclosure, edges of the support frame 70 are provided with stop structures arranged in a peripheral direction; when the elastic pad is placed on the support frame 70, the elastic pad may be located between the stop structures, and the stop structures may limit the elastic pad to prevent the elastic pad from displacing in the horizontal direction, and improving the stability of the use of the elastic bars. The stop structures may have various structures, including but not limited to the stop bars shown in FIG. 49. For example, in some embodiments, the stop structure is a ring of continuously-extending stop edge. Optionally, in some embodiments, the stop structures are peripherally spaced stop bars. For example, in FIG. 49, an upwardly-extending stop bar is provided on the top of each of both ends of each transverse support member 73; after the elastic pad is placed on the support frame 70, a plurality of spaced stop bars on opposite sides will stop the opposite sides of the elastic pad to limit the elastic pad.

In addition, the elastic pad 2 can be applied as desired. For example, the elastic pad 2 may be used as an outdoor pad or an indoor pad. For example, the elastic pad 2 may be used as an elastic mattress, a sofa cushion, a chair cushion and a bench cushion.

The scope of protection of the present disclosure is defined only by the appended claims. Given the teaching of the present disclosure, those skilled in the art could easily envision using alternative structures of those disclosed herein as feasible alternative embodiments, and combining the embodiments disclosed herein to form new embodiments, which should all fall into the scope defined by the appended claims.

## Claims

1. A storage case for storing an elastic pad, wherein the storage case (24) comprises an upper case body (33) and a lower case body (34) that can be opened and closed by a lock structure (25), and the upper case body (33) and the lower case body (34) from a storage space configured to store elastic pad parts of the disassembled elastic pad (2);
wherein at least one recess (26) recessed toward the storage space is formed on a side wall of the storage case (24), and the at least one recess (26) is provided with the lock structure (25).

2. The storage case of claim 1, wherein the storage case (24) comprises a hinged side portion (27) hingedly connecting the upper case body (33) with the lower case body (34), a locking side portion (28) arranged opposite to the hinged side portion (27), and locking end portions (29) arranged opposite to each other at both sides of the hinged side portion (27) and the locking side portion (28), wherein the locking side portion (28) is provided with a plurality of the lock structures (25) arranged at an interval in an extending direction thereof, and each of the locking end portions (29) is provided with at least one lock structure (25).

3. The storage case of claim 2, wherein a side carry strap (30) is provided on the locking side portion (28), wherein the side carry strap (30) spans the at least one lock structure (25) located in the middle in an extension direction of the locking side portion (28).

4. The storage case of claim 1, wherein the lock structure (25) comprises a lock catch (31) and a lock plate (32), wherein the lock catch (31) is provided on one of the upper case body (33) and the lower case body (34) of the storage case (24), and one end of the lock plate (32) is pivotably provided on the other one of the upper case body (33) and the lower case body (34), wherein the other end of the lock plate (32) is bent outwardly in an arc shape to form a raised portion (35) so that the user may apply a force on the raised portion to pull the lock plate, and wherein the lock plate (32) is formed with a lock hook (36) capable of engaging with and disengaging from the lock catch (31).

5. The storage case of claim 1, wherein at least one locking end portions (29) of the storage case (24) is provided with running wheels (37), and the opposite other of the at least one locking end portion (29) is provided with an end edge carry strap (38);
or, the other locking end portion (29) is provided with a telescopic pull rod (46).

6. The storage case of claim 1, wherein the pull rod (46) is a U-shaped rod (47) comprising two telescopic strut assemblies (48) respectively provided at both lateral sides of the lower case body (34) in a width direction thereof and extending toward the at least one locking end portion (29).

7. The storage case of claim 1, wherein lifting structures (49) that can be releasably engaged each other are provided at two opposite sides of the lower case body (34), wherein the two opposite sides of the storage case (24) are provided with tying structures (50) that can releasably engage with each other, and a tying space (51) surrounded by the tying structures (50) on both sides is formed to constrain a pad layer (15) of the elastic pad which is in a wound state, wherein the lifting structures (49) on both sides form a receiving space (52) when they are engaged together, and the tying structures (50) are located in the receiving space (52).

8. The storage case of claim 7, wherein the tying structures (50) on both sides are disposed on a corresponding lifting structures (49).

9. The storage case of claim 8, wherein the lifting structure (49) on each side comprises a U-shaped lifting strap (53), one end of each of two connecting strap sections (54) of the U-shaped lifting strap (53) are disposed on a side surface of the lower case body (34), and the U-shaped lifting straps (53) on both sides releasably engage with each other;
the tying structures (50) on both sides comprise tying straps (55) disposed on two sides, ends of the tying straps (55) on both sides far away from each other are connected to respective connecting strap sections (54), and ends of the tying straps (55) on both sides facing toward each other are provided with releasable securing structures, wherein at least one tying strap (55) among the tying straps (55) on both sides is adjustable in length.

10. The storage case of claim 1, wherein a recess is formed on a bottom wall of the storage space, and a nested assembly (39) formed by sequentially nesting a plurality of elastic module units (1) after the disassembly of the elastic pad (2) is received and retained in the recess at least via the bottom thereof.

11. The storage case of claim 1, wherein an elastic shielding portion is formed on a side wall of the storage space, and the elastic shielding portion is configured to shield an inner space of each elastic module (4) of the lowermost elastic module unit (1) among the sequentially-nested elastic module units of the elastic pad.

12. The storage case of claim 1, wherein the storage case (24) comprises running wheels (37) provided at at least one end portion, and a lifting-pulling member (57) pivotable about a pivot connection point (56), wherein the lifting-pulling member (57) is configured to be pivotable to any one of a pulled position, a lifted position, and a received position.

13. The storage case of claim 12, wherein the lifting-pulling member (57) is configured to be parallel to a top surface (240) of the storage case (24) when in the pulled position;
when the lifting-pulling member (57) is in the lifted position, a gripping bar (570) of the lifting-pulling member (57) is positioned above a middle portion of the storage case (24);
when the lifting-pulling member (57) is in the received position, the gripping bar (570) of the lifting-pulling member (57) contacts the top surface (240) of the storage case (24).

14. The storage case of claim 12, wherein the storage case (24) further comprises a first releasable stop structure (60) and a second releasable stop structure (61), wherein the first releasable stop structure (60) is configured to maintain the lifting-pulling member (57) in the pulled position; the second releasable stop structure (61) is configured to allow the lifting-pulling member (57) to pivot between the lifted position and the received position when the second releasable stop structure (61) engages with the lifting-pulling member (57).

15. The storage case of claim 14, wherein the second releasable stop structure (61) is configured to allow the lifting-pulling member (57) to pivot from the lifted position to the received position under the action of its own gravity and to pivot from the received position to the lifted position under the action of a lifting force applied by the user.

16. The storage case of claim 14, wherein the second releasable stop structure (61) is disposed in an upward sloping manner such that a lifting stop point (615) of the second releasable stop structure (61) is higher than a receiving stop point (616) of the second releasable stop structure (61), and the lifting stop point (615) is located between the receiving stop point (616) and the pivot connection point (56).

17. The storage case of claim 14, wherein the first releasable stop structure (60) comprises a fixed base (601), a first puller (602), a first stop bar (603), and a first hook (604), wherein the fixed base (601) is disposed to separate from the first hook (604), the first stop bar (603) is pivotally connected to the first puller (602) which is pivotally disposed on the fixed base (601), and the first puller (602), upon pivoting, can move the first stop bar (603),
wherein when the first puller (602) is in a released position, the first stop bar (603) can be allowed to be hung on the first hook (604); when the first puller (602) is pivoted to a locking position, the first stop bar (603) and the first hook (604) are locked, and the lifting-pulling member (57) can be held in the pulled position by the first stop bar (603); and
wherein when the first puller (602) is pivoted to the released position, the first stop bar (603) and the first hook (604) are unlocked so that the first stop bar (603) can disengage from the first hook (604), thereby allowing the lifting-pulling member (57) to disengage from the first stop bar (603).

18. The storage case of claim 14, wherein the second releasable stop structure (61) comprises a fixed plate (610), a second puller (611), a second stop bar (612) and a second hook (613), wherein the second puller (611) is pivotably disposed at one end of the fixed plate (610), the second hook (613) is disposed at the other end of the fixed plate (610), the second stop bar (612) is pivotally connected to the second puller (611) which is configured to move the second stop bar (612) upon pivoting,
wherein when the second puller (611) is in a released position, the second stop bar (612) is allowed to be hung on the second hook (613), and when the second puller (611) is pivoted to a locking position, the second stop bar (612) and the second hook (613) are locked, so that a holding space (614) is formed between the second stop bar (612) and the fixed plate (610), and the lifting-pulling member (57) can pass through the holding space (614) to pivot between the lifted position and the received position; and
wherein when the second puller (611) is pivoted to the released position, the second stop bar (612) and the second hook (613) are unlocked such that the second stop bar (612) disengages from the second hook (613), thereby enabling the lifting-pulling member (57) to disengage from the holding space (614).

19. The storage case of claim 14, wherein the lifting-pulling member (57) is a U-shaped member, two side bars (571) of the U-shaped member are provided at its one end on the opposite side portions of the storage case (24) by means of their respective pivot structures (58), and the other end of the two side bars of the U-shaped member connected by a gripping bar (570), and every side portion is provided with a first releasable stop structure (60) and a second releasable stop structure (61).

20. The storage case of any of claims 1-19, wherein an edge of an access opening edge of one of the upper case body (33) and lower cases body (34) is formed with a pre-positioning groove (44) extending circumferentially, an edge of an access opening edge of the other of the upper case body (33) and lower case body (34) is formed with a pre-positioning flange (45) extending circumferentially, and the pre-positioning flange (45) is configured to match with the pre-positioning groove (44).

21. An elastic pad device, wherein the elastic pad device comprises:
the storage case (24) according to any of claims 1-20;
an elastic pad (2) configured to be detachably assembled;
wherein the elastic pad (2) is configured such that the elastic pad parts of the disassembled elastic pad can be stored in the storage space and the storage case (24) can be closed; and
the elastic pad parts can be taken out of the storage space and assembled into the elastic pad after the storage case (24) is opened.

22. The elastic pad device of claim 21, wherein the elastic pad (2) comprises a pad layer (15) and a plurality of elastic module units (1), wherein
each of the elastic module units (1) comprises a fixed bottom plate (3) formed with a plurality of openings and a plurality of elastic modules (4) that are disposed on the plurality of openings of the fixed bottom plate (3), each of the elastic modules (4) is formed with an inner space, wherein the plurality of elastic modules (4) of one elastic module unit (1) can be respectively embedded into an inner space of the plurality of elastic modules (4) of another elastic module unit (1) through corresponding openings on the fixed bottom plate (3) of the another elastic module unit (1), so that the plurality of elastic module units (1) can be sequentially nested together to form a nested assembly (39), wherein the inner space of each elastic module (4) of the lowermost elastic module unit (1) serves as an article placing space (40) for receiving additional articles;
the pad layer (15) is configured to be folded from an unfolded state into a folded block (41);
wherein the nested assembly (39) and the folded block (41) can be placed in the storage space.

23. The elastic pad device of claim 22, wherein the folded block (41) is a U-shaped block (42) that wraps an elastic module portion (43) of the nested assembly (39);
preferably, the nested assembly (39) is received and retained in a recess formed on a bottom wall of the storage space at least via the bottom thereof.

24. The elastic pad device of claim 22, wherein the fixed bottom plate (3) comprises splicing sides (5) arranged opposite to each other and end sides (6) arranged opposite to each other, each of the end sides (6) includes a plurality of connectors, the plurality of connectors include at least one of a rotary detent member (7) and an engagement member (8), the rotary detent member (7) is configured to swing to and fro about a pivot axis so that it releasably engages an engagement member (8) of an adjacent elastic module unit (1); and the engagement member (8) is configured to releasably engage with a rotary detent member (7) of an adjacent elastic module unit (1);
wherein the plurality of fixed bottom plates (3) are spliced together by the engagement of the adjacent rotary detent members (7) and engagement members (8), so that the plurality of elastic module units (1) are assembled into an elastic support layer (21).

25. The elastic pad device of claim 24, wherein corners of each of the end sides (6) are respectively provided with the rotary detent member (7) and the engagement member (8), the rotary detent members (7) disposed at the two end sides (6) arranged opposite to each other are located on one of diagonals of the elastic module unit (1), the engagement members (8) are located on the other of the diagonals of the elastic module unit (1), and the rotation direction of the rotary detent members (7) are identical.

26. The elastic pad device of claim 24, wherein the engagement member (8) comprises a snap-in post (9).

27. The elastic pad device of claim 24, wherein a receiving groove (10) for receiving connectors is formed on a peripheral side surface of each corner of the fixed bottom plate (3).

28. The elastic pad device of claim 27, wherein an operating opening (12) is formed on an upper side wall (11) of the receiving groove (10) so that a user can apply a force to rotate the rotary detent member (7).

29. The elastic pad device of claim 27, wherein the rotary detent member (7) comprises a detent hook (13) and a peg (14), the detent hook (13) is configured to be releasably snapped to an engagement member (8) of an adjacent elastic module unit (1), wherein, the rotary detent member (7) comprises a storage position where the peg (14) is located within the receiving groove (10) and a part of the detent hook (13) extends laterally out from the receiving groove (10) and an engagement position where the detent hook (13) is located within the receiving groove of the adjacent elastic module unit and a part of the peg (14) extends laterally out from the receiving groove (10) of the adjacent elastic module unit.

30. The elastic pad device of claim 24, wherein the rotary detent member (7) is configured to releasably hook a corresponding connection rope (16) on a cover (22) of the elastic pad.

31. The elastic pad device of claim 24, wherein a pre-positioning structure is formed on each of the splicing sides (5), and is configured to engage a pre-positioning structure on a splicing side (5) of a fixed bottom plate (3) of an adjacent elastic module unit (1).

32. The elastic pad device of claim 31, wherein the pre-positioning structure comprises a first pre-positioning structure (17) and a second pre-positioning structure (18) that are spaced apart in an extending direction of the splicing side, the second pre-positioning structure (18) is different from the first pre-positioning structure (17);
wherein the first pre-positioning structure (17) is configured to engage with a second pre-positioning structure of an adjacent elastic module unit (1), and the second pre-positioning structure (18) is configured to engage with a first pre-positioning structure (17) of an adjacent elastic module unit (1).

33. The elastic pad device of claim 32, wherein the first pre-positioning structure (17) located at one side of the elastic module unit and the second pre-positioning structure (18) located at the other side are aligned with each other in a transverse direction of the elastic module unit, and the second pre-positioning structure (18) located at one side of the elastic module unit and the first pre-positioning structure (17) located at the other side are aligned with each other in the transverse direction of the elastic module unit.

34. The elastic pad device of claim 32, wherein the first pre-positioning structure (17) is a pre-positioning bump (19), and the second pre-positioning structure (18) is a pre-positioning groove (20).

35. The elastic pad device of claim 22, wherein the fixed bottom plate (3) comprises a first plate portion (311) and a second plate portion (312) arranged in a lengthwise direction thereof, a plurality of elastic modules (4) being provided on the first plate portion (311) and the second plate portion (312), respectively, wherein an end of the first plate portion (311) and the second plate portion (312), facing toward each other, are connected together by a hinge structure (313) at its one side, and the other side of the end of the first plate portion and the second plate portion, facing toward each other is disposed with a releasable connecting structure (314), wherein in a first position, wide sides of the first plate portion (311) and the second plate portion (312) are spliced together; when the connecting structure is released, the first plate portion (311) and the second plate portion (312) can be pivoted from the first position to a second position; in the second position, long sides of the first plate portion (311) and the second plate portion (312) are spliced together.

36. The elastic pad device of claim 22, wherein the nested assembly (39), when placed in the storage space, forms a storage gaps (59) with side walls of the storage space, wherein the folded block (41) can be inserted into the storage gaps (59).

37. The elastic pad device of claim 36, wherein the elastic pad (2) further comprises a cover (22), wherein the cover (22) is configured to be folded from an unfolded state to a folded state and be received in the folded block (41).

38. The elastic pad device of claim 22, wherein the elastic pad (2) further comprises a cover (22) comprising:
at least one inner core layer (221) containing an elastic core layer;
an outer wrapping sleeve (222) releasably wrapping the at least one inner core layer (221);
a stop fold (23) folded downward from a peripheral edge of the cover (22) in a thickness direction of the elastic pad (2) and extending a predetermined distance to form an inner space capable of receiving and shielding the pad layer (15) of the elastic pad (2);
wherein the cover (22) is laid on the pad layer (15) of the elastic pad, and the pad layer (15) is received and limited in the inner space (231); and
wherein the cover (22) can be received in the storage space after being folded.

39. The elastic pad device of claim 38, wherein the stop fold (23) is formed in such a way that a portion of the outer wrapping sleeve (222) is folded downward from the peripheral edge of the cover (22) and extends a predetermined distance.

40. The elastic pad device of claim 38, wherein the at least one inner core layer (221) is folded down from the peripheral edge of the cover (22) and extends a predetermined distance so as to form a folded layer (2211), and the outer wrapping sleeve (222) is folded down from the peripheral edge of the cover (22) and extends a predetermined distance so as to form a folded sleeve (2221), wherein the folded sleeve (2221) wraps the folded layer (2211) to form the stop fold (23).

41. The elastic pad device of claim 38, wherein the cover (22) further comprises an edge connection structure configured to connect with a bottom layer of the elastic pad; the stop fold (23) and the edge connection structure jointly form the elastic pad (2) without a sealed sidewall;
preferably, at least two opposing stop folds (23) of the stop folds (23) are connected to the bottom layer of the elastic pad by the edge connection structure.

42. The elastic pad device of claim 41, wherein the edge connection structure comprises a plurality of connection ropes (16) arranged spaced-apart in the peripheral direction of the elastic pad.

43. The elastic pad device of claim 41, wherein the stop folds (23) extend close to the bottom layer of the elastic pad and are spaced apart a predetermined distance from the bottom layer of the elastic pad, and the length of the stop fold (23) is set so as to shield at least a part or all of the height of the elastic module of the elastic pad.

44. The elastic pad device of any of claims 21-43, wherein the elastic pad device further comprises a support frame (70) configured to have a flat state where the elastic pad (2) can be laid on the support frame (70) and a storage state where the support frame (70) can be received in the storage space and the storage case (24) can be closed.

45. The elastic pad device of claim 44, wherein the plurality of elastic module units (1) of the elastic pad (2) can be sequentially nested together to form a nested assembly (39) that can be placed in the storage space in a manner of its horizontally-spaced plurality of elastic modules being oriented upward;
the support frame (70) in the storage state has a plurality of through-spaces (71) that are horizontally spaced from each other and can be placed on the nested assembly (39) such that the elastic modules (4) are received in the corresponding through-spaces (71).

46. The elastic pad device of claim 45, wherein the support frame (70) comprises a plurality of longitudinal support members (72) and a plurality of transverse support members (73) detachably assembled together, wherein
each of the longitudinal support members (72) comprises a plurality of first through-spaces (721) that are spaced apart from each other, each of the first through-spaces (721) is configured to receive at least one elastic module;
each of the transverse support members (73) comprises a plurality of second through-spaces (731) spaced apart from each other and configured to receive at least two elastic modules (4).

47. The elastic pad device of claim 46, wherein each of the longitudinal support members (72) comprises a plurality of longitudinal support sections (722) connected sequentially together in a longitudinal direction, and the plurality of longitudinal support sections (722) can be stacked together such that the first through-spaces (721) of the plurality of longitudinal support sections (722) overlap;
and/or,
each of the transverse support members (73) comprises a plurality of transverse support sections (732) sequentially connected together in the transverse direction, and the plurality of transverse support sections (732) can be stacked together such that the second through-spaces (731) of the plurality of transverse support sections (732) overlap.

48. The elastic pad device of claim 47, wherein the plurality of longitudinal support sections (722) are rotatably coupled together sequentially in the longitudinal direction; and/or, the plurality of transverse support sections (732) are rotatably connected together sequentially in a transverse direction.
